# EUROPEAN PATENT APPLICATION

(11) **EP 4 794 436 A1**
(43) Date of publication of application: **19.08.2026**
(21) Application number: 24884473.0
(22) Date of filing: 18.10.2024
(51) Int. Cl.: H04W 74/00

(54) **RANDOM ACCESS METHOD AND RELATED APPARATUS**

(30) Priority: 03.11.2023 CN 202311464436
(71) Applicant: HUAWEI TECHNOLOGIES CO., LTD., Shenzhen 518129 (CN)
(72) Inventor: SHI, Meng, Shenzhen, Guangdong 518129 (CN); YU, Tong, Shenzhen, Guangdong 518129 (CN); LIAO, Shuri, Shenzhen, Guangdong 518129 (CN); DOU, Shengyue, Shenzhen, Guangdong 518129 (CN); ZHANG, Xiaoyu, Shenzhen, Guangdong 518129 (CN)
(74) Representative: MERH-IP Matias Erny Reichl Hoffmann Patentanwälte PartG mbB
(86) International application number: PCT/CN2024/125916
(87) International publication number: WO 2025/092469

(57) **Abstract**

This application provides a random access method and apparatus, which help reduce a collision probability of sending a random access preamble in a random access process and improve an access capacity. The method includes: sending, by a network device, configuration information to a terminal device, where the configuration information is used to indicate that an SSB corresponds to a plurality of beams, and each of the plurality of beams corresponds to one or more ROs; receiving, by the terminal device, the configuration information, determining a target beam from the plurality of beams, and sending a random access preamble to the network device on an RO corresponding to the target beam; and receiving, by the network device, the random access preamble.

## Description

This application claims priority to Chinese Patent Application No. 202311464436.1, filed with the State Intellectual Property Office of China on November 3, 2023, and entitled "Random Access Method and Related Apparatus," which is incorporated herein by reference in its entirety.

### Technical Field

This application relates to the communications field, and in particular, to a random access method and a related apparatus.

### Background

In a non-terrestrial network (non-terrestrial network, NTN) communication system, each satellite can generally cover a large area. Under a given link budget and system resources, a satellite network can improve the coverage area of a single beam through beam design to enhance the overall satellite coverage. Due to the limited coverage of a single beam, a single satellite still needs a large number of beams to achieve a wider coverage.

In a random access (random access, RA) phase, the satellite, as a network device, needs to sequentially scan all beams and configure random access resources for the terminal device. The random access process generally refers to a process from when a terminal device sends a random access preamble (preamble) to attempt to access the network device to when the terminal device establishes a basic signaling connection with the network device. Currently, the network device may broadcast different synchronization signal blocks (synchronization signal block, SSB) for different communication areas, and distinguish the SSBs by using index numbers (index) of the SSBs. Index numbers of different SSBs indicate downlink synchronization signals in different beam directions.

According to the 3rd Generation Partnership Project (3rd generation partnership project, 3GPP) protocol, a terminal device may determine a corresponding random access occasion (RA occasion, RO) based on an SSB, and send a random access preamble on the RO through a physical random access channel (physical random access channel, PRACH) to send an access request. A time-frequency resource location of the RO resource is configured by a network side.

However, there is a limited number of random access preambles available for an RO corresponding to an SSB wide beam, and there may be a case where a plurality of terminal devices select the same random access preamble. This may cause a collision of random access preambles, thereby affecting an access capacity.

### SUMMARY

This application provides a random access method and a related apparatus, to reduce a probability of collision of random access preambles sent in a random access process, and improve an access capacity.

According to a first aspect, a random access method is provided. The method may be performed by a terminal device, or may be performed by a component (for example, a processor, a chip, or a chip system) of the terminal device, or may be implemented by a logical module or software that can implement all or some functions of the terminal device.

The method includes: receiving configuration information from a network device, where the configuration information is used to indicate that an SSB corresponds to a plurality of beams, and each of the plurality of beams corresponds to one or more ROs; determining a target beam from the plurality of beams; and sending a random access preamble to the network device on an RO corresponding to the target beam.

In this application, that an SSB corresponds to a plurality of beams may be understood as that a wide beam (referred to as an SSB wide beam) corresponding to one SSB may further correspond to a plurality of narrow beams, that is, one SSB corresponds to a plurality of narrow beams (referred to as SSB narrow beams). A coverage area of one SSB wide beam includes coverage areas of the plurality of SSB narrow beams. The target beam is one of the plurality of SSB narrow beams, and a location of the terminal device is within the coverage area of the target beam.

It should be understood that one SSB originally corresponds to one wide beam, and one SSB wide beam has one or more ROs corresponding to the SSB wide beam. However, in this application, one SSB may correspond to a plurality of narrow beams, and each SSB narrow beam has an RO corresponding to the SSB narrow beam. In this way, an RO corresponding to one SSB wide beam may include ROs corresponding to a plurality of SSB narrow beams.

When an SSB wide beam covers a plurality of terminal devices, different terminal devices may be located in coverage areas of different SSB narrow beams. When different terminal devices select different SSB narrow beams as target beams, because different SSB narrow beams correspond to different ROs, a collision between different terminal devices when sending random access preambles can be avoided, thereby improving an access capacity within this wide beam. In addition, because the SSB narrow beam has a relatively high gain, this is conducive to improving PRACH transmission performance.

With reference to the first aspect, in some implementations of the first aspect, the determining a target beam from the plurality of beams includes: obtaining a coverage area of at least one beam in the plurality of beams; and determining the target beam from the at least one beam based on a location of the terminal device and the coverage area of the at least one beam.

In this application, the at least one beam refers to at least one SSB narrow beam, and a quantity of the at least one beam is less than or equal to a quantity of the plurality of beams. That the terminal device obtains the coverage of the at least one beam in the plurality of beams means that when determining the target beam, the terminal device may obtain, in an iterative manner, the coverage of one of the plurality of SSB narrow beams each time, and determine whether a location of the terminal device is within the coverage of the SSB narrow beam. When the terminal device determines that its location is within the coverage of the SSB narrow beam, the terminal device stops detection. This manner helps reduce a calculation amount of the terminal device.

With reference to the first aspect, in some implementations of the first aspect, before the obtaining the coverage of the at least one beam in the plurality of beams, the method further includes: receiving first information and beam pattern information from a network device, where the first information is used to indicate a coverage area of the network device, the beam pattern information is used to indicate a distribution of at least one SSB in the coverage area of the network device, a plurality of beams corresponding to each of the at least one SSB, and a distribution of the plurality of beams in the coverage area of the corresponding SSB; determining the coverage of the at least one SSB based on the distribution of the at least one SSB in the coverage area of the network device; and determining the coverage of the plurality of beams based on the distribution of the plurality of beams in the coverage area of the corresponding SSB.

With reference to the first aspect, in some implementations of the first aspect, before the obtaining a coverage area of at least one of the plurality of beams, the method further includes: receiving second information and coverage angle information of a beam, where the second information is used to indicate a location of the network device, and the coverage angle information of the beam is used to indicate a coverage angle of each of the plurality of beams; and determining the coverage areas of the plurality of beams based on the location of the network device and the coverage angle information of the beam.

With reference to the first aspect, in some implementations of the first aspect, before the obtaining a coverage area of at least one of the plurality of beams, the method further includes: obtaining coordinates of a center point of at least one of the plurality of beams. The determining, based on the location of the terminal device and the coverage area of the at least one beam, a target beam from the at least one beam includes: determining, based on the location of the terminal device and the coordinates of the center point of the at least one beam, a distance between the terminal device and each of the at least one beam; and determining a beam in the at least one beam whose distance from the terminal device meets a preset condition as the target beam.

With reference to the first aspect, in some implementations of the first aspect, the preset condition includes: being less than or equal to a preset threshold; or, having the shortest distance.

With reference to the first aspect, in some implementations of the first aspect, before obtaining the coordinates of the center point of at least one of the plurality of beams, the method further includes: receiving third information from a network device, where the third information is used to indicate the coordinates of the center point of each of the plurality of beams, or is used to indicate a distance between a reference point and each of the plurality of beams and a coverage angle of each of the plurality of beams; and determining the coordinates of the center point of each of the plurality of beams based on the third information.

According to a second aspect, a random access method is provided. This method may be performed by a network device, or may be performed by a component (such as a processor, a chip, or a chip system) of the network device, or may be implemented by a logical module or software that can achieve all or a part of the functions of the base station.

The method includes: sending configuration information to a terminal device, where the configuration information is used to indicate that an SSB corresponds to a plurality of beams, and each of the plurality of beams corresponds to one or more ROs; and receiving a random access preamble from the terminal device, where the random access preamble is located on an RO corresponding to a target beam in the plurality of beams.

In this application, that an SSB corresponds to a plurality of beams may be understood as that a wide beam (referred to as an SSB wide beam) corresponding to one SSB may further correspond to a plurality of narrow beams, that is, one SSB corresponds to a plurality of narrow beams (referred to as an SSB narrow beam). A coverage area of one SSB wide beam includes coverage areas of the plurality of SSB narrow beams. The target beam is one of the plurality of SSB narrow beams, and a location of the terminal device is within the coverage area of the target beam.

It should be understood that one SSB originally corresponds to one wide beam, and one SSB wide beam has one or more ROs corresponding to the SSB wide beam. However, in this embodiment of this application, one SSB may correspond to a plurality of narrow beams, and each SSB narrow beam has an RO corresponding to the SSB narrow beam. In this way, the RO corresponding to one SSB wide beam may include the ROs corresponding to the plurality of SSB narrow beams. In this way, when different terminal devices select different SSB narrow beams as target beams, because the ROs corresponding to the different SSB narrow beams are different, a collision can be avoided when different terminal devices send random access preambles, and the network device may receive random access preambles from different terminal devices on the ROs corresponding to the different SSB narrow beams, thereby improving an access capacity within this wide beam. In addition, because the SSB narrow beam has a relatively high gain, this is conducive to improving the transmission performance of the PRACH.

With reference to the second aspect, in some implementations of the second aspect, the method further includes: sending first information and beam pattern information to the terminal device, where the first information is used to indicate the coverage area of the network device, and the beam pattern information is used to indicate the distribution of the at least one SSB in the coverage area of the network device, a plurality of beams corresponding to each of the at least one SSB, and the distribution of the plurality of beams in the coverage area of the corresponding SSB. This helps reduce signaling overheads of the network device.

With reference to the second aspect, in some implementations of the second aspect, the method further includes: sending second information and beam coverage angle information to the terminal device, where the second information is used to indicate a location of the network device, and the beam coverage angle information is used to indicate a coverage angle of each of the plurality of beams. This helps reduce signaling overheads of the network device.

With reference to the second aspect, in some implementations of the second aspect, the method further includes: sending third information to the terminal device, where the third information is used to indicate a coordinate of a center point of each of the plurality of beams; or used to indicate a distance between a reference point and each of the plurality of beams and a coverage angle of each of the plurality of beams. This indication manner is simple and direct, which helps simplify an operation of determining the coverage areas of the plurality of beams.

According to a third aspect, a communications apparatus is provided, including: configured to perform the method in any one of the possible implementations of any one of the foregoing aspects. Specifically, the apparatus includes a module configured to perform the method in any one of the possible implementations of any one of the foregoing aspects.

In a design, the apparatus may include modules that are in one-to-one correspondence with the methods/operations/steps/actions described in any one of the foregoing aspects, where each module may be a hardware circuit, software, or a combination of a hardware circuit and software.

In another design, the apparatus is a communication chip. The communication chip may include an input circuit or interface configured to send information or data, and an output circuit or interface configured to receive information or data.

In another design, the apparatus is a terminal device or a network device, and the terminal device or the network device may include a transmitter configured to send information or data, and a receiver configured to receive information or data.

In another design, the apparatus is configured to perform the method in any one of the possible implementations of any one of the foregoing aspects, and the apparatus may be configured in a terminal device or a network device.

According to a fourth aspect, a communications apparatus is provided, including a processor, where the processor is configured to invoke and run a computer program from a memory, so that the apparatus performs the method in any one of the possible implementations of any one of the foregoing aspects.

Optionally, the apparatus further includes a memory, where the memory may be configured to store instructions and data. The memory is coupled to the processor, and when the processor executes the instructions stored in the memory, the method described in the foregoing aspects may be implemented.

Optionally, the apparatus further includes a transmitter (transmitter) and a receiver (receiver), where the transmitter and the receiver may be disposed separately, or may be integrated together and referred to as a transceiver (transceiver).

According to a fifth aspect, a computer program product is provided. The computer program product includes a computer program (which may also be referred to as code or an instruction). When the computer program is run, a computer is enabled to perform the method in any one of the possible implementations of any one of the foregoing aspects.

According to a sixth aspect, a computer-readable storage medium is provided. The computer-readable storage medium stores a computer program (which may also be referred to as code or an instruction), and when the computer program is run on a computer, the computer is enabled to perform the method in any one of the possible implementations of any one of the foregoing aspects.

According to a seventh aspect, this application provides a chip system, where the chip system includes at least one processor, configured to support implementation of the functions involved in any one of the foregoing aspects, for example, receiving or processing data involved in the foregoing method.

In a possible design, the chip system further includes a memory, where the memory is configured to store program instructions and data, and the memory is located inside or outside the processor.

Optionally, the chip system may include a chip, or may include a chip and another discrete component.

### Briefing of the Drawings

FIG. 1 is a schematic diagram of an extreme wide coverage scenario;
FIG. 2 is a schematic diagram of a random access phase and a service data transmission phase;
FIG. 3 is a schematic diagram of a mapping relationship between an SSB and an RO;
FIG. 4 is a schematic diagram of a PRACH configuration;
FIG. 5 is a schematic diagram of a wide beam and a narrow beam;
FIG. 6 is a schematic diagram of a random access phase and a service data transmission phase according to an embodiment of this application;
FIG. 7 is a schematic architectural diagram of a communications system to which an embodiment of this application is applicable;
FIG. 8 is a schematic architectural diagram of an NTN to which an embodiment of this application is applicable;
FIG. 9 is a schematic diagram of a satellite communication scenario to which an embodiment of this application is applicable;
FIG. 10 is a schematic flowchart of a random access method according to an embodiment of this application;
FIG. 11A and FIG. 11B are schematic diagrams of an RO configuration for an SSB narrow beam according to an embodiment of this application;
FIG. 12 is a schematic diagram of a beam coverage area according to an embodiment of this application;
FIG. 13 and FIG. 14 are schematic diagrams of a random access phase according to an embodiment of this application;
FIG. 15 is a schematic flowchart of another random access method according to an embodiment of this application;
FIG. 16 and FIG. 17 are schematic diagrams of a beam coverage pattern according to an embodiment of this application;
FIG. 18 is a schematic flowchart of yet another random access method according to an embodiment of this application;
FIG. 19 is a schematic flowchart of still another random access method according to an embodiment of this application;
FIG. 20 to FIG. 22 are schematic block diagrams of a communications apparatus according to embodiments of this application.

### Specific Implementation

The following describes the technical solutions in this application with reference to the accompanying drawings.

Before the random access method and related apparatus provided in the embodiments of this application are described, the following points are first described.

First, in the embodiments shown below, terms and English acronyms, such as configuration information, SSB, and target beam, are provided as examples for ease of description, and should not constitute any limitation on this application. This application does not exclude the possibility of defining other terms that can implement a same or similar function in an existing or future protocol.

Second, the first, the second, and various numbers in the embodiments shown below are merely used for differentiation for ease of description, and are not intended to limit the scope of the embodiments of this application.

Third, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects."At least one of the following items (pieces)" or a similar expression thereof means any combination of these items, including any combination of one or more items (pieces). For example, "at least one of a, b, and c" may represent the following cases: a, or b, or c, or a and b, or a and c, or b and c, or a, b, and c, where a, b, and c may each be one or more.

Fourth, "sending" and "receiving" in this application indicate a direction of signal transmission. For example, "sending a random access preamble to a network device" may be understood as that a destination of the random access preamble is the network device, and may include directly sending the random access preamble through an air interface, or may include indirectly sending the random access preamble through an air interface by another unit or module. "Receiving configuration information from the network device" may be understood as that a source of the configuration information is the network device, and may include directly receiving the configuration information from the network device through an air interface, or may include indirectly receiving the configuration information from the network device through an air interface from another unit or module. "Sending" may also be understood as "output" of a chip interface, and "receiving" may also be understood as "input" of a chip interface.

In other words, sending and receiving may be performed between devices, for example, between a terminal device and a network device; or may be performed within a device, for example, through a bus, a cable, or an interface, between components, between modules, between chips, or between software or hardware modules within the device.

The following provides an introduction to the relevant technologies and concepts involved in this application.

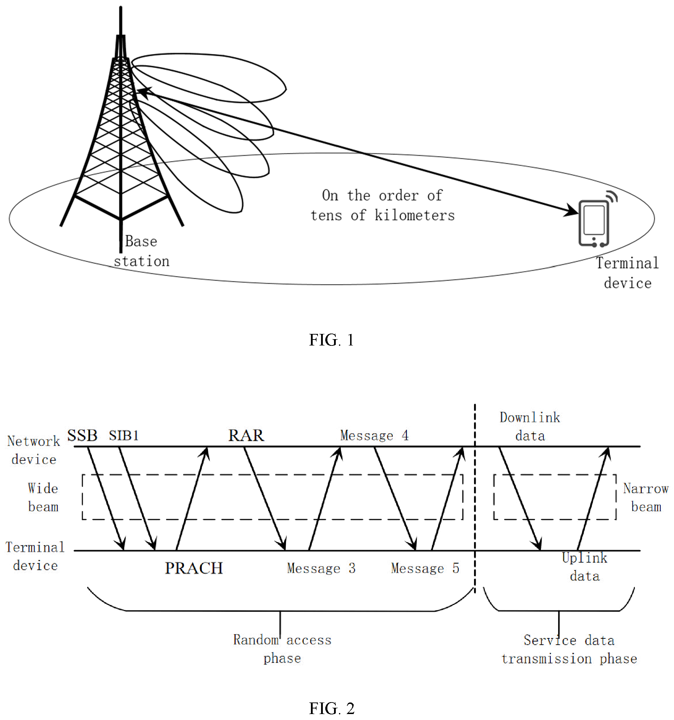

The 6th generation mobile communication technology (6th generation mobile communication technology, 6G) and future communication systems consider an ultra-wide coverage scenario as illustrated in Figure 1, where a base station can provide services to terminal devices within an area of tens of kilometers. This scenario has the following characteristics: First, the transmission distance is long, the path loss is significant, and the power on both the base station and terminal device sides is limited. Second, the base station is located at a high position, and the channel between the base station and the user tends to be a line-of-sight (LOS) transmission of a wireless channel. Third, under ultra-wide coverage, it is necessary to not only ensure user access across the entire coverage area but also guarantee user performance.

In the context of ultra-wide coverage, there can be various scenario requirements. For example, in satellite scenarios, the large coverage area of satellites can accommodate access from a large number of users. Another example is ultra-large coverage on the ground, which can reach tens of kilometers in scale.

Due to the advantages of satellites, such as their resistance to natural disasters or external physical damage, research is currently being conducted on using satellites as access network devices (e.g., base stations) in mobile communication systems to provide communication services for areas such as oceans and forests. Unlike terrestrial base stations, satellites move at a relatively high speed relative to the ground and have a longer signal propagation distance, which results in greater signal path loss when satellites are used as base stations (referred to as satellite base stations). The communication mechanisms currently designed for terminal devices and terrestrial base stations in mobile communication systems cannot be directly applied to communication between terminal devices and satellites. Therefore, to enable satellites to function as base stations and provide communication services to terminal devices, how to overcome the signal path loss and improve coverage between terminal devices and satellite base stations, and how to ensure stable initial access for terminal devices while reducing access delay, are urgent issues that need to be addressed.

To support broader service coverage, network equipment may need to provide network services for larger communication areas. Taking the NTN (Non-Terrestrial Network) communication system as an example, each satellite/high-altitude platform/base station can typically cover a large area. Under given link budgets and system resources, satellites enhance the coverage of the entire satellite by designing beams (beams) to increase the coverage area of a single beam. However, due to the limited coverage of a single beam, a single satellite still requires a large number of beams to achieve broader coverage.

Among these, a beam is the main lobe of the directional pattern of a signal. The coverage area of a beam refers to the projection range of the beam on the ground. Network devices can adjust the weights of antennas to direct the beams they transmit in different directions, thereby achieving different coverage areas. The coverage area of a beam discussed in this application refers to the coverage area of the beam on the ground. As the satellite base station moves and the weights are adjusted, the coverage area of the beam will also change accordingly.

During the random access phase, the satellite, acting as a network device, sequentially scans all beams to configure random access resources for the terminal device. The random access process generally refers to the period from when the terminal device sends a random access preamble to attempt to access the network device, until a basic signaling connection is established between the terminal device and the network device. Currently, the network device may broadcast different SSBs (Synchronization Signal Blocks) for different communication areas and distinguish between different SSBs using the index numbers of the SSBs. Typically, different SSB index numbers indicate downlink synchronization signals in different beam directions, covering and serving different areas. After receiving the SSB, the terminal device completes timing synchronization and determines the time-frequency location of the system information block 1 (SIB1) based on the information indicated in the SSB, thereby completing the parsing of SIB1 to obtain cell information. The terminal device then detects SIB19 according to the search space for SIB19 configured in SIB1 and completes data parsing to obtain the satellite's ephemeris information. After obtaining the cell information and/or the ephemeris information, the terminal device sends a random access preamble on the corresponding uplink resource based on the configuration information and the SSB index. For the network device, the area where the terminal device is located can be determined by the received random access preamble and the corresponding uplink resource, thereby establishing a connection with the terminal device.

FIG. 2 is a schematic diagram of a random access phase and a service data transmission phase, and briefly describes a four-step random access procedure of new radio (new radio, NR). The random access procedure includes the following steps: A network device sends an SSB to a terminal device by using a wide beam. The terminal device receives SIB1 based on the SSB, and obtains cell information, RO resource configuration information, and the like from the SIB1. The terminal device determines an RO to be used based on an index of the SSB and the RO resource configuration information, and performs physical random access channel (physical random access channel, PRACH) transmission on the determined RO to send a random access request. After receiving the PRACH, the network device sends a random access response (random access response, RAR) to the terminal device, and schedules, by using the RAR, the terminal device to send a message 3 (message 3) on a corresponding time-frequency resource to send a radio resource control (radio resource control, RRC) connection setup request. After receiving the message 3, the network device sends a message 4 (message 4) to the terminal device to perform RRC connection setup. After receiving the message 4, the terminal device sends a message 5 (message 5) to the network device to complete an initial access process.

In the random access phase mentioned above, the network device and the terminal device complete an initial access process by using a wide beam. In a service data transmission phase, the network device obtains channel state information (channel state information, CSI) or a user location, and transmits service data by using a narrow beam, thereby improving a link budget and a communication rate.

In an initial access process in an ultra-wide coverage scenario, the PRACH is associated with the SSB, and a PRACH is sent by using a same wide beam for random access. Thereafter, a narrow beam can be obtained for uplink and downlink data transmission only after access is completed.

It should be noted that the wide beam and the narrow beam are relative concepts. A beam width refers to an angle size of the beam, and the beam width may affect a coverage area of the beam. The wide beam refers to a beam with a large angle and a wide coverage area. The narrow beam refers to a beam with a small angle and a narrow coverage area.

Although using a wide beam corresponding to the SSB in the random access process can ensure comprehensive coverage, a gain of the wide beam is relatively low, and transmission performance is limited.

According to the 3GPP protocol definition, a terminal device may determine the corresponding RO based on the SSB and perform PRACH transmission on the RO to initiate a random access request, where the time-frequency resource location of the RO is configured by the network device side. The PRACH transmission includes the terminal device sending a random access preamble to the base station.

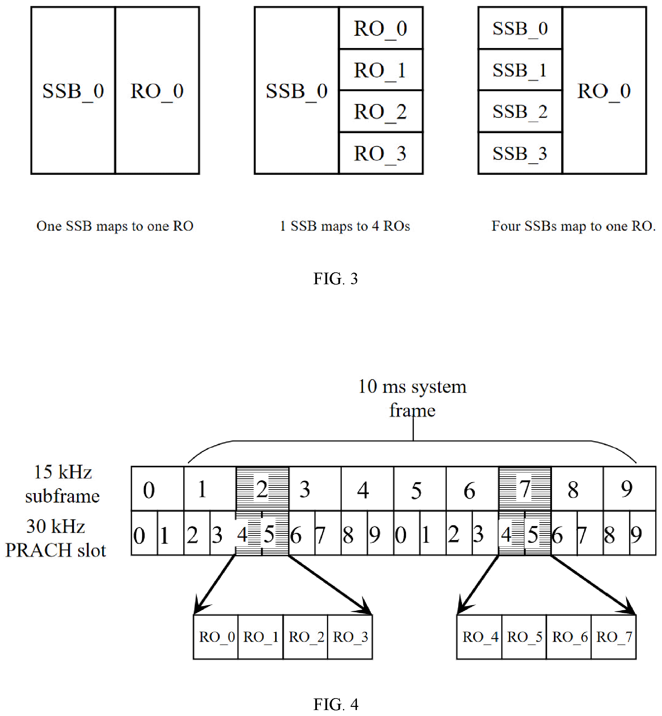

Network devices may define the time-domain format of the RO through a format table and specify the mapping relationship between the RO and SSB in the frequency domain through parameters. Figure 3 is a schematic diagram illustrating a mapping relationship between SSB and RO. As shown in Figure 3, the mapping relationship between the RO and SSB in the frequency domain can be one-to-one, as illustrated by the mapping relationship between SSB_0 and RO_0 in Figure 3; it can also be many-to-one, as illustrated by the mapping relationships between RO_0, RO_1, RO_2, and RO_3 and SSB_0 in Figure 3; or it can be one-to-many, as illustrated by the mapping relationships between RO_0 and SSB_0, SSB_1, SSB_2, and SSB_3 in Figure 3.

In addition to sending the mapping relationship between the RO and the SSB to the terminal device, the network device may further send RO resource configuration information to the terminal device. Table 1 shows a type of RO resource configuration information using a random access configuration index 251 as an example.

**Table 1**

| Random access configuration index | Preamble Format | (N_{SFN}) mod(x) = y | | Subframe number | *l*₀ | ${N}_{slot}^{RA}$ | ${N}_{t}^{RA , slot}$ | ${N}_{dur}^{RA}$ |
|---|---|---|---|---|---|---|---|---|
| | | x | y | | | | | |
| 251 | C2 | 1 | 0 | 2,7 | 0 | 2 | 2 | 6 |

In Table 1, the RACH configuration period is determined by the radio frame (frame) as a unit, and is defined by the period x and the offset value y, meaning that PRACH resources are configured at the location where the frame number (N _{SFN}) mod(x) = y. The random access preamble format (which may be referred to as the preamble format) is C2, the subframe numbers (subframe number) where ROs exist are 2 and 7, and the start symbol = 0 indicates that the starting position of the first RO in the time domain is at symbol 0 (symbol 0). This also indicates the number of 30 kHz (kHz) PRACH slots (PRACH slot) corresponding to one subframe, and the number of ROs that can be configured in each PRACH slot. The value = 6 indicates the number of symbols occupied by the random access time domain resources. Based on Table 1, a schematic diagram of PRACH configuration as shown in Figure 4 can be obtained. ${l}_{0} {N}_{slot}^{RA} {N}_{t}^{RA , slot} {N}_{dur}^{RA}$

As shown in Figure 4, there are 10 subframes (subframe) in a 10 millisecond (ms) system frame (system frame), and the subframe numbers where ROs exist are 2 and 7. One subframe corresponds to two 30 kHz PRACH slots, and each PRACH slot can be configured with two time domain ROs. Therefore, eight time domain ROs can be configured within 10 ms.

After the network device sends a plurality of SSBs to the terminal device, the terminal device selects an RO corresponding to one of the SSBs to transmit a random access preamble, and the network device receives, on the RO, the PRACH sent by the terminal device.

To improve beam transmission performance, in a possible implementation, the network device may divide the system information into cell-level system information and area-level system information. The cell-level system information includes an extended master information block (master information block extended, MIB-E), and the area-level system information includes a remaining system information block (system information block remaining, SIB-R). The MIB-E is used to carry system information necessary for initiating PRACH transmission by the terminal device, thereby reducing the amount of information to be carried and improving a link budget to some extent. In addition, using the MIB-E under a limited link budget to reduce the number of bits for carrying system information is beneficial for improving transmission performance. In addition, a correspondence between a wide beam and a plurality of area-level narrow beams (the area-level narrow beam may be referred to as a narrow beam for short in this application) is defined, where a coverage area of one wide beam includes coverage areas of a plurality of narrow beams, and a coverage area of the narrow beam is less than a coverage area of the wide beam.

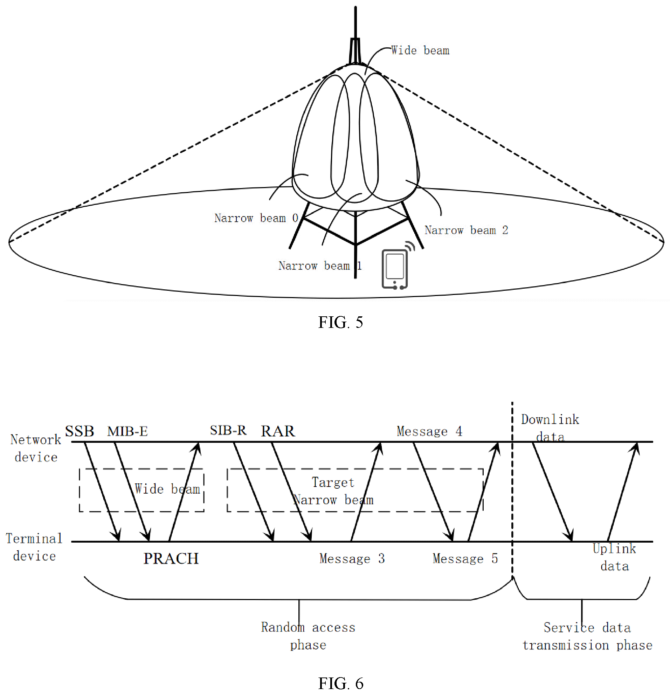

Figure 5 is a schematic diagram illustrating a wide beam and narrow beams. As shown in Figure 5, the coverage area of a wide beam encompasses the coverage areas of three narrow beams: narrow beam 0, narrow beam 1, and narrow beam 2.

Based on the aforementioned method, Figure 6 is a schematic diagram illustrating a random access phase and a service data transmission phase according to an embodiment of this application. As shown in Figure 6, during the random access phase, the network device may use a wide beam to transmit the SSB and MIB-E, ensuring extensive coverage of necessary information. After receiving the MIB-E, the terminal device performs PRACH transmission using the wide beam.

In a possible implementation, the base station concurrently receives PRACH signals using multiple narrow beams (for example, narrow beam 0, narrow beam 1, and narrow beam 2 in FIG. 5), locates the position of the terminal device, and determines a target narrow beam (for example, narrow beam 2 in FIG. 5) among the multiple narrow beams, where the position of the terminal device is within the coverage area of the target narrow beam. The base station then sends subsequent SIB-R, RAR, and message 4 to the terminal device through the target narrow beam, thereby improving the transmission performance of the channel. The terminal device opens a receive window and receives the SIB-R, RAR, and message 4 within the receive window.

In another possible implementation, when the terminal device performs PRACH transmission using a wide beam, the terminal device may simultaneously send the location information of the terminal device to the base station, and the base station may determine the target narrow beam based on the location information of the terminal device.

During the service data transmission phase, the base station and the terminal device use narrow beams for uplink and downlink data transmission.

In the random access process of the method described above, the PRACH is associated with the SSB, and the PRACH transmission is performed using the same wide beam. However, when the terminal device performs PRACH transmission based on the RO resources corresponding to the wide beam, due to the limited number of available random access preambles for the RO resources corresponding to one wide beam, collisions of random access preambles are likely to occur, which affects the access capacity. In addition, due to the lower gain of the wide beam, the performance of PRACH transmission is limited.

In view of this, the embodiments of this application provide a random access method and an apparatus thereof. In this method, a network device may configure a wide beam to correspond to a plurality of narrow beams, where each narrow beam corresponds to one or more resource regions (ROs). Terminal devices located in different areas may send random access preambles on the ROs corresponding to the narrow beams to which they belong. This helps reduce the probability of collisions when sending random access preambles during the random access process, thereby improving the access capacity. Moreover, since narrow beams are used for PRACH transmission, the narrow beams offer a higher gain, which is beneficial for enhancing the transmission performance of the PRACH.

Among these, when the location of the terminal device is within the coverage area of a certain narrow beam, this narrow beam is the narrow beam to which the terminal device belongs.

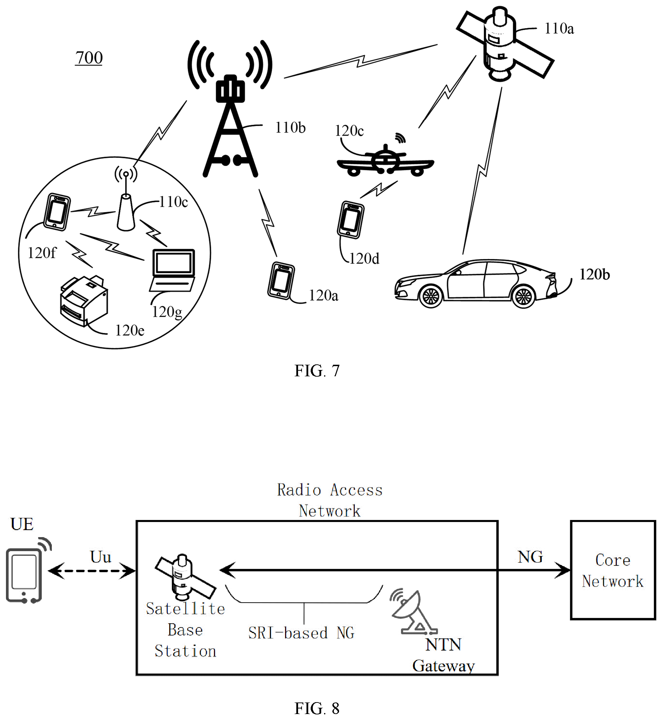

FIG. 7 is a schematic architectural diagram of a communication system 700 to which an embodiment of this application is applicable. As shown in FIG. 7, the communication system 700 may include at least one access network device (such as 110a, 110b, and 110c in FIG. 7), and may further include at least one terminal (such as 120a-120g in FIG. 7). The access network devices may be interconnected through wired or wireless means. FIG. 7 is merely a schematic diagram, and the communication system may further include other network devices, for example, may further include a wireless relay device and a wireless backhaul device.

FIG. 8 is a schematic diagram of an architecture of an NTN applicable to an embodiment of this application. As shown in FIG. 8, a satellite has some or all functions of an access network device, and may be referred to as a satellite base station. The satellite base station may provide a radio access service and schedule radio resources for a terminal device that accesses a network through the satellite base station. The satellite base station communicates with the terminal device through a user-universal terrestrial radio access network (universal terrestrial radio access network-user, Uu) interface. The satellite base station may communicate with a core network (core network, CN) through a next generation (next generation, NG) interface, and the satellite base station and the core network may exchange non-access stratum (non-access stratum, NAS) signaling of the core network and service data of a user through the NG interface. The satellite radio interface (satellite radio interface, SRI) serves as a feeder link between the NTN gateway and the satellite. In FIG. 8, the SRI may implement communication interaction between the satellite and the core network as a part of the NG interface.

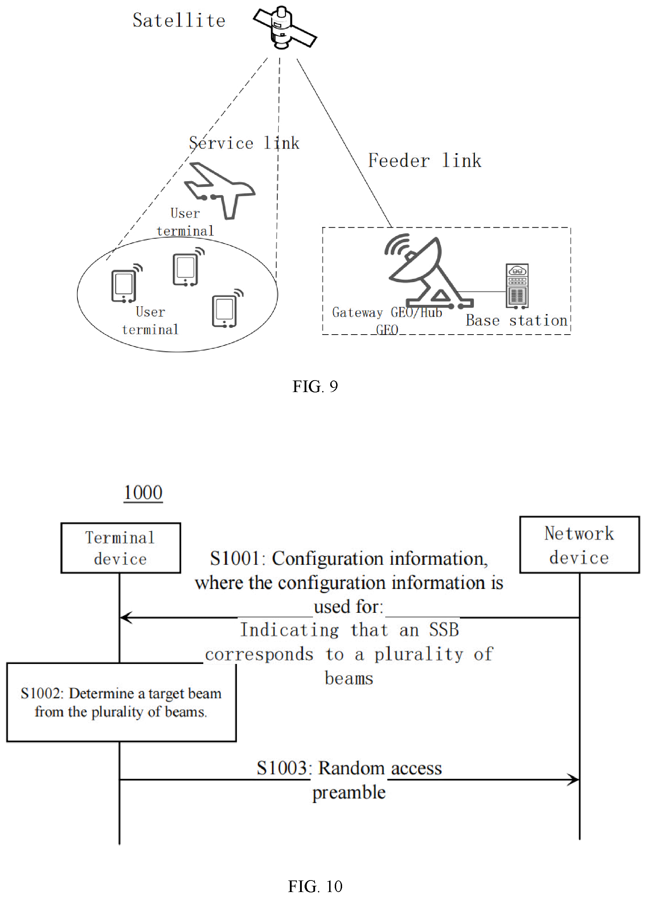

The communication scenario shown in Figure 9 may be referred to as a satellite communication scenario, in which the network devices include satellite devices and gateway stations/gateway nodes (gateway). The terminal devices may include Internet of Things (IoT) terminals, or may be terminals of other forms and performance, such as mobile phone terminals or high-altitude aircraft, which is not limited herein. The link between the satellite and the terminal device (or referred to as a user terminal) is called a service link, and the link between the satellite and the gateway station/gateway node is called a feeder link. The solutions of this application can also be applied to a multi-satellite communication scenario that is an extension of the communication scenario shown in Figure 9.

Optionally, satellite devices can be classified into transparent mode and regenerative mode according to the working mode. When a satellite operates in transparent mode, the satellite has the function of relay and forwarding. A gateway station/gateway node has the function or some functions of a base station, and in this case, the gateway station/gateway node may be considered as a base station.

Optionally, when the satellite operates in the regeneration mode, the satellite has a data processing capability and functions as a base station or partially functions as a base station, and in this case, the satellite may be considered as a base station. It should be noted that the technical solutions in the embodiments of this application are applicable to a communication system that integrates terrestrial communication and satellite communication, which may also be referred to as an NTN communication system. The terrestrial communication system may be, for example, a long term evolution (long term evolution, LTE) system, a universal mobile telecommunication system (universal mobile telecommunication system, UMTS), a 5th generation mobile communication technology (5th generation mobile communication technology, 5G) communication system, a new radio (new radio, NR) system, or a communication system developed as a next step of the 5G communication system. This is not limited herein.

In these systems, satellite communication systems have a wider coverage area compared to traditional mobile communication systems, and they can overcome natural geographical obstacles such as oceans, deserts, and mountains. To address the shortcomings of traditional communication networks, satellite communication can serve as an effective supplement to these networks.

Satellite communication systems can be classified into the following three types based on the orbital altitude of the satellites: geostationary earth orbit (GEO) satellite communication systems (also known as synchronous orbit satellite systems), medium earth orbit (MEO) satellite communication systems, and low earth orbit (LEO) satellite communication systems.

GEO satellites, also known as geostationary satellites, typically have an orbital altitude of 35,786 kilometers (km). Their main advantage is that they remain stationary relative to the Earth's surface and can provide a large coverage area. However, GEO satellites also have some significant drawbacks: the distance from the Earth is too great, requiring large-diameter antennas; the transmission delay is relatively high, around 0.5 seconds, which cannot meet the requirements of real-time services; in addition, the orbital resources are relatively limited, the launch costs are high, and they cannot provide coverage for the polar regions.

The orbit height of MEO satellite is 2000-35786 km. MEO satellite can achieve global coverage with a relatively small number of satellites. However, MEO satellite has a higher transmission delay than LEO satellite, and MEO satellite is mainly used for positioning and navigation.

The orbit height of the LEO satellite ranges from 300 km to 2000 km. Compared with the MEO satellite and GEO satellite, the LEO satellite has a lower orbit height, which reduces the data transmission delay, reduces the power loss, and reduces the launch cost. Therefore, LEO satellite communication network has attracted wide attention in recent years.

It is generally believed that NTN communication has different channel characteristics compared with terrestrial communication, such as long transmission delay and large Doppler shift. For example, a round-trip delay for GEO satellite communication is 238-270 (ms). The round-trip delay of LEO satellite communication is 8 ms to 20ms.

The network device provided in the embodiments of this application may be a base station (base station), a node B (Node B), an evolved node B (evolved NodeB, eNodeB or eNB), or a transmission reception point (transmission reception point). TRP), a next generation NodeB (gNB) in a 5G mobile communication system, and an open radio access network (open radio access network, O-RAN or open RAN) an access network device in, and a next-generation base station in 6G. Alternatively, the network device may be a satellite base station (a satellite base station in FIG. 8) in an NTN communications network, a base station in a future mobile communications system, an access node in a Wireless Fidelity (Wireless Fidelity, WiFi) system, or the like. Alternatively, the network device may be a module or a unit that completes some functions of the base station, for example, may be a centralized unit (central unit, CU), a distributed unit (distributed unit, DU), or a centralized unit control plane (CU control plane). a CU-CP) module, a centralized unit user plane (CU user plane, CU-UP) module, or the like. The access network device may be a satellite base station (110a in FIG. 7), or may be a macro base station (110b in FIG. 7), or the access network device may be a micro base station or an indoor station (110c in FIG. 7). It may also be a relay node, a host node, or the like. A specific technology used by the access network device and a specific device form are not limited in this application. The 5G mobile communications system may also be referred to as an NR mobile communications system. The access network node in this application may be an access network device, or may be a module or a unit configured in the access network device.

The terminal device provided in the embodiments of this application may also be referred to as a terminal, user equipment (user equipment, UE), a mobile station, a mobile terminal, or the like. The terminal device may be widely used in various scenarios for communication. These scenarios include, for example, but are not limited to, at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D), vehicle to everything (vehicle to everything, V2X), machine type communication (machine-type communication, MTC), internet of things (internet of things, IOT), virtual reality, augmented reality, industrial control, self-driving, telemedicine, smart grid, smart home, smart office, smart wearable, smart transportation, smart city, or the like. The terminal may be a mobile phone (for example, the mobile phones 120a, 120d, and 120f in FIG. 7), a tablet computer, a computer with a wireless transceiver function (for example, the computer 120g in FIG. 7), a wearable device, a vehicle (for example, the vehicle 120b in FIG. 7), a helicopter, an airplane, an unmanned aerial vehicle (for example, the UAV 120c in FIG. 7), a ship, a robot, an industrial robot arm, a smart home device (for example, the printer 120e in FIG. 7), or the like. This application does not limit a specific technology or a specific device form used by the terminal device.

The base station and/or terminal device may be fixed in position or may be movable. The base station and/or terminal device may be deployed on land, including indoor or outdoor, handheld, or vehicle-mounted; or may be deployed on water; or may be deployed on an airplane, balloon, or artificial satellite in the air. This application does not limit the environment/scenario in which the base station and the terminal device are located. The base station and the terminal device may be deployed in the same or different environments/scenarios. For example, the base station and the terminal device may be simultaneously deployed on land; or the base station may be deployed on land, while the terminal device may be deployed on water, and so on. Specific examples are not provided here one by one. This application does not limit the communication method between terminal devices.

In the embodiments of this application, the terminal device and the network device may be hardware devices, or may be software functions running on dedicated hardware, or software functions running on general-purpose hardware, for example, virtualized functions instantiated on a platform (for example, a cloud platform), or may be entities including dedicated or general-purpose hardware devices and software functions. A specific form of the terminal device and the network device is not limited in this application.

FIG. 10 is a schematic flowchart of a random access method 1000 according to an embodiment of this application. The method 1000 involves interaction between a terminal device and a network device, where the network device may be, for example, a satellite base station, and the terminal device may be, for example, a mobile phone. Specific forms of the network device and the terminal device are not limited in this embodiment of this application.

The method 1000 includes S1001 to S1003, with the specific steps as follows:
S1001: The network device sends configuration information to the terminal device, where the configuration information is used to indicate that an SSB corresponds to a plurality of beams, and each of the plurality of beams corresponds to one or more ROs. Correspondingly, the terminal device receives the configuration information.

Herein, the fact that an SSB corresponds to multiple beams means that one SSB corresponds to multiple narrow beams (for example, the wide beam described in FIG. 5 corresponds to narrow beam 0, narrow beam 1, and narrow beam 2). It should be understood that originally, one SSB would correspond to one wide beam, whereas in this application, one SSB corresponds to multiple narrow beams, that is, the wide beam corresponding to one SSB may correspond to multiple narrow beams. The coverage area of the wide beam corresponding to one SSB may include the coverage areas of the multiple narrow beams corresponding to the SSB. The ROs corresponding to the multiple narrow beams are different from each other.

For ease of description, the wide beam corresponding to the SSB is referred to as an SSB wide beam, and the narrow beam corresponding to the SSB is referred to as an SSB narrow beam in the following.

The network device may define the RO resource based on the quantity of SSB narrow beams. For example, the quantity of the plurality of SSB narrow beams is N, and N=2. A value of N=2 indicates that one SSB wide beam corresponds to two SSB narrow beams, or one SSB wide beam may be split into two SSB narrow beams.

For example, the network device indicates that an SSB_0 (the SSB_0 may represent an SSB whose index number is 0) corresponds to two SSB narrow beams, including an SSB narrow beam 0 and an SSB narrow beam 1, where a wide beam corresponding to the SSB_0 is an SSB wide beam 0, and there is a mapping relationship between the SSB wide beam 0 and the RO_0. When an SSB wide beam 0 corresponds to an SSB narrow beam 0 and an SSB narrow beam 1, the network device may divide the RO resource of the SSB wide beam 0 into an RO_0_0 corresponding to the SSB narrow beam 0 and an RO_0_1 corresponding to the SSB narrow beam 1 when configuring the RO resource of the SSB wide beam 0. This is equivalent to that an SSB wide beam 0 originally corresponds to one RO_0, while in this application, the SSB wide beam 0 corresponds to RO resources including an RO_0_0 and an RO_0_1. The RO_0_0 and the RO_0_1 are different.

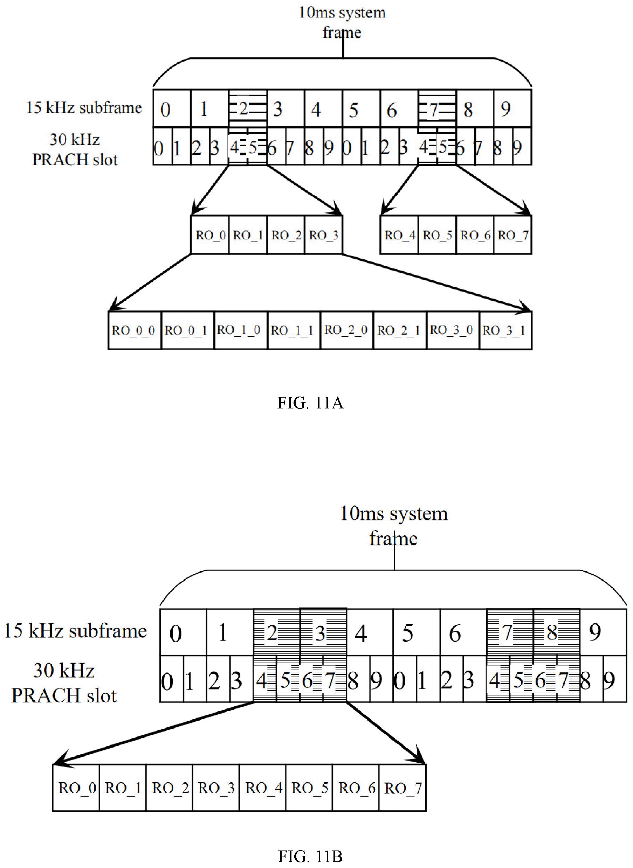

FIG. 11A is a schematic diagram of RO configuration for an SSB narrow beam according to an embodiment of this application. FIG. 11A may be understood with reference to the foregoing description of FIG. 4. As shown in FIG. 11A, a subframe whose subframe number is 2 includes four ROs: RO_0, RO_1, RO_2, and RO_3. Before the network device adds a correspondence between an SSB wide beam and a plurality of SSB narrow beams, it is assumed that an SSB wide beam 0 corresponds to an RO_0, an SSB wide beam 1 corresponds to an RO_1, an SSB wide beam 2 corresponds to an RO_2, and an SSB wide beam 3 corresponds to an RO_3. After the network device adds the correspondence between the SSB wide beam and the plurality of SSB narrow beams, the RO corresponding to the SSB wide beam may include the ROs corresponding to the plurality of SSB narrow beams.

For example, after an SSB wide beam 0 is added to correspond to an SSB narrow beam 0_0 and an SSB narrow beam 0_1, an RO corresponding to the SSB wide beam 0 may include an RO_0_0 and an RO_0_1, where an RO_1_0 and an RO_1_1 are respectively an RO corresponding to the SSB narrow beam 0_0 and an RO corresponding to the SSB narrow beam 0_1.

For example, after the SSB wide beam 1 corresponds to the SSB narrow beam 1_0 and the SSB narrow beam 1_1 are added, the RO corresponding to the SSB wide beam 1 may include an RO_1_0 and an RO_1_1, where the RO_1_0 and the RO_1_1 are respectively the RO corresponding to the SSB narrow beam 1_0 and the SSB narrow beam 1_1.

For example, after the SSB wide beam 2 corresponds to the SSB narrow beam 2_0 and the SSB narrow beam 2_1 are added, the RO corresponding to the SSB wide beam 2 may include an RO_2_0 and an RO_2_1, where the RO_2_0 and the RO_2_1 are respectively the RO corresponding to the SSB narrow beam 2_0 and the SSB narrow beam 2_1.

For example, after the SSB wide beam 3 corresponds to the SSB narrow beam 3_0 and the SSB narrow beam 3_1 are added, the RO corresponding to the SSB wide beam 3 may include an RO_3_0 and an RO_3_1, where the RO_3_0 and the RO_3_1 are respectively the RO corresponding to the SSB narrow beam 3_0 and the SSB narrow beam 3_1.

In the foregoing example, each SSB narrow beam corresponds to one RO. In addition, one SSB narrow beam may correspond to a plurality of ROs.

In a possible case, a maximum of two ROs may be configured in one PRACH slot. For example, in the PRACH slot (PRACH slot #4) whose slot number is 4 in FIG. 11A, a maximum of two ROs, namely, RO_0 and RO_1, may be configured. For example, in the PRACH slot (PRACH slot #5) whose slot number is 5 in FIG. 11A, a maximum of two ROs, namely, RO_2 and RO_3, may be configured. In this case, after the network device adds the correspondence between the SSB wide beam and the plurality of SSB narrow beams, the RO resources in one PRACH slot cannot be further split. In this case, the network device may configure doubling of the PRACH slot of 30 kHz, and increase a quantity of PRACH slots in which ROs can be configured, thereby increasing a quantity of ROs in a system frame.

With reference to the foregoing description, FIG. 11B is a schematic diagram of another RO configuration for an SSB narrow beam according to an embodiment of this application. As shown in FIG. 11B, subframe numbers in which ROs exist are 2, 3, 7, and 8. One subframe corresponds to two PRACH slots of 30 kHz. For example, subframe #2 corresponds to a PRACH slot #4 and a PRACH slot #5, and subframe #3 corresponds to a PRACH slot #6 and a PRACH slot #7. Two time domain ROs may be configured for each PRACH slot.

For example, the RO corresponding to the PRACH slot #4 includes RO_0 and RO_1, the RO corresponding to the PRACH slot #5 includes RO_2 and RO_3, the RO corresponding to the PRACH slot #6 includes RO_4 and RO_5, and the RO corresponding to the PRACH slot #7 includes RO_6 and RO_7. After the network device adds the correspondence between the SSB wide beam and the plurality of SSB narrow beams, for example, the SSB wide beam 0 corresponds to the SSB narrow beam 0_0 and the SSB narrow beam 0_1, the SSB wide beam 1 corresponds to the SSB narrow beam 1_0 and the SSB narrow beam 1_1, the SSB wide beam 2 corresponds to the SSB narrow beam 2_0 and the SSB narrow beam 2_1, and the SSB wide beam 3 corresponds to the SSB narrow beam 3_0 and the SSB narrow beam 3_1, the network device may configure the SSB narrow beam 0_0 to correspond to the RO_0, the SSB narrow beam 0_1 to correspond to the RO_1, the SSB narrow beam 1_0 to correspond to the RO_2, the SSB narrow beam 1_1 to correspond to the RO_3, the SSB narrow beam 2_0 to correspond to the RO_4, the SSB narrow beam 2_1 to correspond to the RO_5, the SSB narrow beam 3_0 to correspond to the RO_6, and the SSB narrow beam 3_1 to correspond to the RO_7.

The quantity N of multiple SSB narrow beams corresponding to an SSB wide beam may be flexibly configured according to different requirements. For example, for different coverage areas, the value of N may be the same or different.

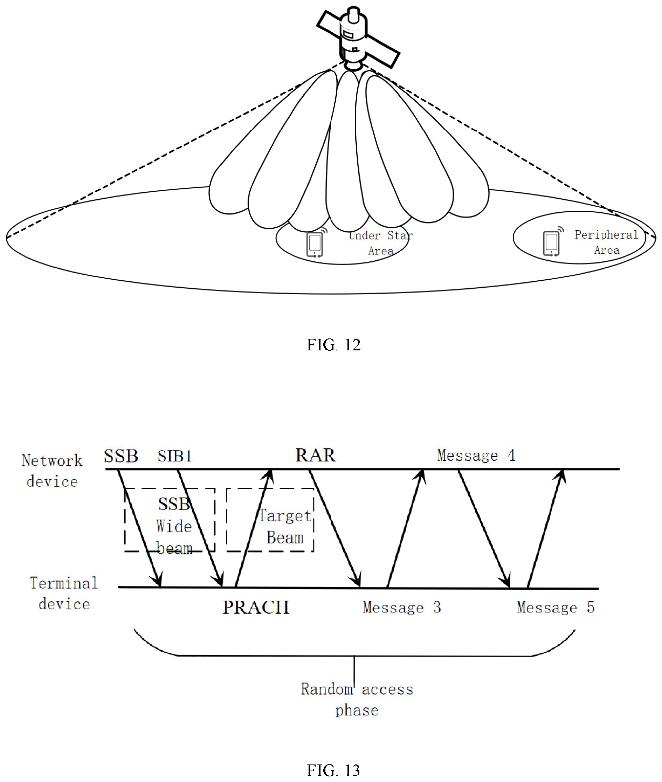

In a possible implementation, for the under-satellite area shown in FIG. 12, there are a relatively large number of users, while a quantity of random access preambles available for an RO is limited. Therefore, collisions are likely to occur when different users send random access preambles, affecting access performance. Based on this, the network device may configure a relatively large value of N for the under-satellite area, for example, N=4, indicating that one SSB corresponds to four narrow beams, that is, an RO resource for one SSB wide beam corresponds to four SSB narrow beams.

In another possible implementation, for the edge area shown in FIG. 12, there are a relatively small number of users, and a probability of collision when different users send random access preambles is relatively low. Based on this, the network device may configure a relatively small value of N for the edge area, for example, N=2, indicating that one SSB corresponds to two narrow beams, that is, an RO resource for one SSB wide beam corresponds to two SSB narrow beams.

By flexibly configuring the N values in different regions as described above, unnecessary resource overheads caused by configuring a unified N value can be avoided.

S1002: The terminal device determines a target beam from the plurality of beams.

Based on the foregoing description of S1001, the terminal device may determine, based on an indication of the configuration information, that the SSB corresponds to a plurality of SSB narrow beams. Different SSB narrow beams each have a corresponding RO. The terminal device may select one SSB narrow beam from the plurality of SSB narrow beams as the target beam. Then, the terminal device may send a random access preamble on the RO corresponding to the target beam to perform random access.

How the target beam is specifically determined from the plurality of beams is described in detail below, and details are not described herein.

S1003: The terminal device sends a random access preamble to the network device, where the random access preamble is located on an RO corresponding to the target beam. Correspondingly, the network device receives the random access preamble. Alternatively, the terminal device sends the random access preamble to the network device on the RO corresponding to the target beam.

Based on the foregoing description of S1002, after determining the target beam, the terminal device may send a random access preamble on an RO corresponding to the target beam for random access (that is, perform PRACH transmission on the RO corresponding to the target beam), and the network device may sequentially detect a plurality of beams to receive the random access preamble. Because the terminal device sends the random access preamble on the RO corresponding to the target beam, that is, the random access preamble is located on the RO corresponding to the target beam among the plurality of beams, the network device may detect the random access preamble on the target beam. Thereafter, the network device and the terminal device may perform message transmission through the target beam to complete a random access process, thereby implementing transmission of service data.

FIG. 13 is a schematic diagram of a random access phase according to an embodiment of this application. As shown in FIG. 13, the random access phase includes: sending an SSB by a network device by using an SSB wide beam. The terminal device receives SIB1 based on the SSB, and obtains RO resource configuration information and the like from the SIB1, where the RO resource configuration information may indicate a mapping relationship between the SSB wide beam and the RO, a plurality of narrow beams (namely, a plurality of SSB narrow beams) corresponding to the SSB, and a mapping relationship between each SSB narrow beam and the RO. In addition, the terminal device also obtains coverage information of at least one SSB narrow beam. For example, the coverage information of the at least one SSB narrow beam may be obtained from the SIB1. After receiving the RO resource configuration information and the coverage information of the at least one SSB narrow beam, the terminal device determines a target beam based on the location of the terminal device, and performs PRACH transmission on an RO corresponding to the target beam to send a random access request. The terminal device may send subsequent messages 3 and 5 through the target beam. Correspondingly, the network device sends an RAR, message 4, and the like on a downlink beam corresponding to the target beam.

In a scenario where multiple terminal devices are within the coverage of a single SSB wide beam, different terminal devices may be located within the coverage of different SSB narrow beams. When different terminal devices select different SSB narrow beams as target beams, the random access preambles sent by these terminal devices can avoid collisions due to the fact that different SSB narrow beams correspond to different resource blocks (ROs). This, in turn, enhances the access capacity within this SSB wide beam. Moreover, due to the higher gain of SSB narrow beams, this approach is beneficial for improving the transmission performance of the PRACH.

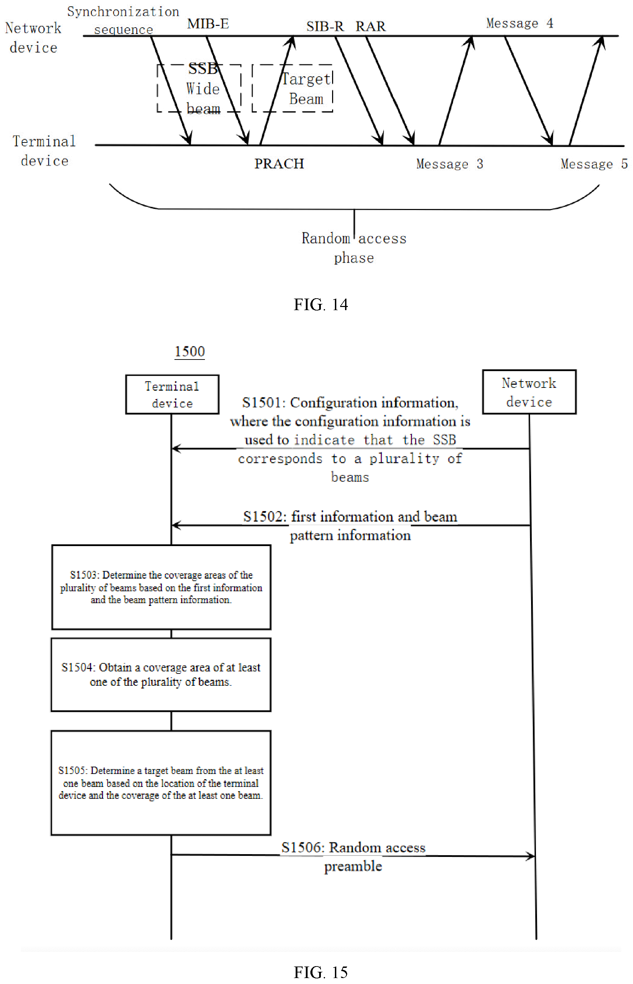

FIG. 14 is a schematic diagram of another random access phase according to an embodiment of this application. As shown in FIG. 14, the random access phase includes: a network device dividing system information into cell-level system information (MIB-E) and region-level system information (SIB-R), where the MIB-E carries configuration information necessary for initiating access by a terminal device, for example, RO resource configuration information and coverage information of at least one SSB narrow beam. The RO resource configuration information is used to indicate the mapping relationship between an SSB wide beam and an RO, the fact that an SSB corresponds to multiple narrow beams (i.e., multiple SSB narrow beams), and the mapping relationship between each SSB narrow beam and an RO. The SIB-R carries specific information for a particular region. The network device sends a synchronization sequence and the MIB-E using an SSB wide beam. After receiving the synchronization sequence and the MIB-E, the terminal device obtains the RO resource configuration information and the coverage information of at least one SSB narrow beam from the MIB-E, determines a target beam based on its own location, and performs PRACH transmission on an RO corresponding to the target beam to send a random access request. After the network device receives the PRACH on the target beam, the network device sends subsequent SIB-R, RAR, and message 4 to the terminal device through the target beam, thereby improving the transmission performance of the channel. The terminal device opens a receive window and receives the SIB-R, RAR, and message 4 within the receive window.

With reference to FIG. 15 to FIG. 19, the following specifically describes an implementation process in which the terminal device determines the coverage areas of the plurality of beams, and determines the target beam based on the coverage areas of the plurality of beams.

FIG. 15 is a schematic flowchart of another random access method 1500 according to an embodiment of this application. The plurality of beams in the method 1500 refer to a plurality of SSB narrow beams corresponding to one SSB wide beam, and the at least one beam refers to at least one SSB narrow beam in the plurality of SSB narrow beams corresponding to one SSB wide beam.

The method 1500 includes S1501 to S1506. Specific steps are as follows:
S1501: A network device sends configuration information to a terminal device, where the configuration information is used to indicate that an SSB corresponds to a plurality of beams, and each of the plurality of beams corresponds to one or more ROs. Correspondingly, the terminal device receives the configuration information.

For an introduction to S1501, refer to the foregoing description of S1001. Details are not described herein again.

S1502: The network device sends first information and beam pattern information to the terminal device. Correspondingly, the terminal device receives the first information and the beam pattern information.

Optionally, the network device is a satellite base station, the first information is ephemeris information of the satellite base station, and the ephemeris information may indicate the coverage area of the satellite base station.

Optionally, the network device broadcasts the beam coverage information carried in the system information. The system information may be, for example, SIB1, MIB, or MIB-E.

S1503: The terminal device determines the coverage areas of the plurality of beams based on the first information and the beam pattern information.

Optionally, S1503 specifically includes: determining, by the terminal device, the coverage area of the at least one SSB based on the distribution of the at least one SSB within the coverage area of the network device; and determining the coverage area of the plurality of beams based on the distribution of the plurality of beams within the coverage area of the corresponding SSB.

The first information is used to indicate a coverage area of the network device, and the beam pattern information is used to indicate distribution of at least one SSB in the coverage area of the network device, a plurality of beams corresponding to each of the at least one SSB, and distribution of the plurality of beams in a coverage area of the corresponding SSB.

The beam pattern information may indicate the distribution/coverage of the SSB in the coverage area of the network device, and the distribution/coverage of the plurality of beams in the coverage area of the SSB. The coverage of the SSB in the coverage area of the network device may also be deduced based on the distribution of the SSB in the coverage area of the network device. In a possible implementation, the terminal device may determine, based on the beam pattern information, the distribution of the SSB in the coverage area of the network device and the distribution of the plurality of beams in the coverage area of the SSB, and then determine the coverage area of the SSB based on the distribution of the SSB in the coverage area of the network device, and determine the coverage areas of the plurality of beams based on the distribution of the plurality of beams in the coverage area of the SSB. In another possible implementation, the terminal device may determine, based on the beam pattern information, the coverage of the SSB in the coverage area of the network device and the coverage of the plurality of beams in the coverage area of the SSB.

Before sending the first information and the beam coverage pattern information to the terminal device, the network device may send a plurality of SSBs (or a plurality of downlink beams) to the terminal device to complete one beam sweeping, so that the synchronization signal covers a service area of the entire cell. Each of the plurality of SSBs corresponds to a beam sweeping direction/area, and finally, each direction/area has one SSB.

For an SSB in a direction/area, the beam pattern information in S1503 is used to indicate the distribution of the at least one SSB in the coverage area of the network device, where the beam pattern information indicates the distribution of the SSB in the direction/area in the coverage area of the network device, that is, indicates only the distribution of the SSBs in the coverage area of the network device; or the beam pattern information indicates the distribution of the plurality of SSBs in the coverage area of the network device, that is, indicates the distribution of the SSBs in the coverage area of the network device.

The following first describes a case in which the beam pattern information is used to indicate the distribution/coverage of the global SSBs within the coverage area of the network device.

For a direction/region, the network device may send the beam pattern information of the plurality of SSBs, and a terminal device in the direction/region may receive the beam pattern information of the plurality of SSBs. In other words, the beam pattern information is used to indicate the distribution/coverage of the plurality of SSBs within the coverage area of the network device, the plurality of beams (SSB narrow beams) corresponding to each of the plurality of SSBs, and the distribution/coverage of the plurality of beams (SSB narrow beams) within the coverage area of the corresponding SSBs. The distribution/coverage of the plurality of SSBs within the coverage area of the network device refers to the distribution/coverage of the wide beams of the plurality of SSBs within the coverage area of the network device. The distribution/coverage of the plurality of beams (SSB narrow beams) within the coverage area of the corresponding SSBs refers to the distribution/coverage of the plurality of SSB narrow beams within the coverage area of the corresponding SSB wide beams.

Optionally, the beam coverage pattern information may include parameters such as a quantity P, a quantity Q, a quantity L, a quantity M, a numbering order of multiple SSB wide beams, a numbering order of multiple SSB narrow beams corresponding to each SSB wide beam, and the like. Herein, P is a quantity of rows of multiple SSB wide beams distributed within the coverage area of the network device, Q is a quantity of columns of multiple SSB wide beams distributed within the coverage area of the network device, L is a quantity of rows of SSB narrow beams distributed within the coverage area of one SSB wide beam, and M is a quantity of columns of SSB narrow beams distributed within the coverage area of one SSB wide beam.

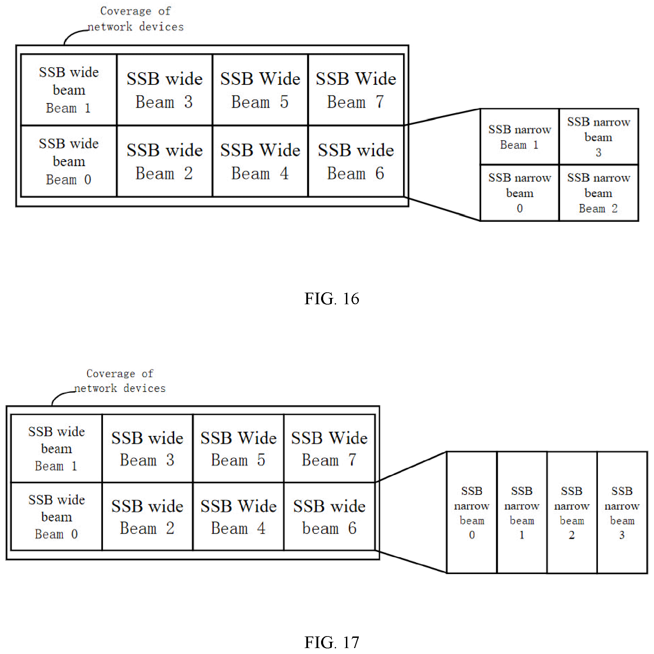

After receiving the parameters such as P, Q, L, M, the numbering order of the multiple SSB wide beams, and the numbering order of the SSB narrow beams corresponding to each SSB wide beam, the terminal device may determine the beam coverage pattern shown in FIG. 16.

FIG. 16 is a schematic diagram of a beam coverage pattern provided for the case of the foregoing multiple SSBs. In the beam pattern shown in FIG. 16, within the coverage area of the network device, multiple SSB wide beams are sequentially numbered along the movement direction of the network device, and eight SSB wide beams are distributed in an arrangement manner of P=2 and Q=4 (that is, 2×4). These SSB wide beams are sequentially SSB wide beam 0, SSB wide beam 1, SSB wide beam 2, SSB wide beam 3, SSB wide beam 4, SSB wide beam 5, SSB wide beam 6, and SSB wide beam 7 from bottom to top and from left to right.

Within the coverage area of each SSB wide beam, multiple SSB narrow beams are sequentially numbered along the movement direction of the network device, and four SSB narrow beams are distributed in an arrangement of L=2 and M=2 (i.e., 2×2). Taking SSB wide beam 6 as an example, from bottom to top and from left to right, the SSB narrow beams are sequentially numbered as SSB narrow beam 0, SSB narrow beam 1, SSB narrow beam 2, and SSB narrow beam 3.

FIG. 17 is a schematic diagram of another beam coverage pattern provided for the case of the foregoing multiple SSBs. In the beam coverage pattern shown in FIG. 17, the distribution of multiple SSB wide beams is the same as that shown in FIG. 16. The difference lies in the fact that within the coverage area of an SSB wide beam, multiple SSB narrow beams are sequentially numbered along the movement direction of the network device, and four SSB narrow beams are distributed in an arrangement of L=1 and M=4 (i.e., 1×4). From left to right, the SSB narrow beams are sequentially numbered as SSB narrow beam 0, SSB narrow beam 1, SSB narrow beam 2, and SSB narrow beam 3.

The foregoing numbering sequence, the arrangement manner of the plurality of SSB wide beams, and the arrangement manner of the plurality of SSB narrow beams are merely examples. The embodiments of this application do not limit the numbering direction or the values of P, Q, L, and M, provided that a value of L×M is equal to a quantity of the plurality of SSB narrow beams, and a value of P×Q is equal to a quantity of the plurality of SSB wide beams.

The following describes a case in which the beam pattern information is used to indicate the distribution/coverage of the local SSBs within the coverage area of the network device.

For an area/direction, the network device sends only the beam pattern information of the SSB in the area/direction, so that a terminal device in an area/direction receives only the beam pattern information of the SSB in the area/direction. That is, the beam pattern information is used to indicate the distribution/coverage of an SSB within the coverage area of the network device, a plurality of beams (SSB narrow beams) corresponding to the SSB, and the distribution/coverage of the plurality of beams (SSB narrow beams) within the coverage area of the SSB. The distribution/coverage of an SSB within the coverage area of the network device means a distribution/coverage of a wide SSB beam within the coverage area of the network device. The distribution/coverage of the plurality of beams within the coverage area of the SSB means a distribution/coverage of the plurality of SSB narrow beams within the coverage area of the wide SSB beam corresponding to the plurality of SSB narrow beams.

In this case, the network device may carry, in the beam pattern information, parameters such as a center point coordinate and a coverage radius of the SSB wide beam in the direction/area, to indicate a distribution or coverage of the SSB wide beam corresponding to the direction/area within the coverage area of the network device.

The terminal device determines, based on the center point coordinate of the SSB wide beam corresponding to the direction/area, the coverage radius of the SSB wide beam corresponding to the direction/area, and the coverage area of the network device, the distribution/coverage of the SSB wide beam corresponding to the direction/area within the coverage area of the network device. Then, the terminal device determines the coverage area of each of the plurality of SSB narrow beams based on the distribution/coverage of the plurality of SSB narrow beams within the coverage area of the SSB wide beam corresponding to the direction/area as indicated in the beam pattern information. For a specific manner of determining the coverage area of each of the plurality of SSB narrow beams in the plurality of SSB narrow beams with reference to the beam pattern information, refer to the foregoing descriptions with reference to FIG. 16. Details are not described herein again.

The beam pattern information in S1503 is used to indicate the distribution/coverage of the plurality of beams in the coverage area of the corresponding SSB, including: directly indicating the distribution/coverage of the plurality of beams in the coverage area of the corresponding SSB; or indicating the distribution/coverage of some of the plurality of beams in the coverage area of the corresponding SSB, and deducing the distribution/coverage of the other beams in the plurality of beams in the coverage area of the corresponding SSB based on the distribution/coverage of the some beams in the coverage area of the corresponding SSB, that is, the beam pattern information indirectly indicates the distribution/coverage of the plurality of beams in the coverage area of the corresponding SSB.

In the direct indication manner, the terminal device may determine, based on information such as the number sequence and the arrangement manner of the plurality of SSB narrow beams, the distribution/coverage of the plurality of SSB narrow beams in the coverage area of the corresponding SSB wide beams, and therefore may determine the coverage area of each SSB narrow beam in the plurality of SSB narrow beams.

For an indirect indication manner, for example, the SSB wide beam 0 corresponds to the SSB narrow beam 0 and the SSB narrow beam 1. The network device may indicate, in the beam coverage pattern information, the distribution of the SSB narrow beam 0 within the coverage area of the SSB wide beam 0, for example, by indicating information such as a coordinate of a center point of the SSB narrow beam 0 and a coverage radius of the SSB narrow beam 0. The terminal device may determine the distribution/coverage of the SSB narrow beam 0 within the coverage area of the SSB wide beam 0 based on the coordinate of the center point of the narrow beam 0, the coverage radius of the SSB narrow beam 0, and the coverage area of the SSB wide beam 0. The network device may further indicate, in the beam coverage pattern, a distance between the center points of the SSB narrow beam 0 and the SSB narrow beam 1. Based on the information such as the numbering sequence and the arrangement manner of the plurality of SSB narrow beams described above, the terminal device may determine the distribution/coverage of the SSB narrow beam 1 within the coverage area of the SSB wide beam 0. In this way, the terminal device determines, based on the beam pattern information, the distribution/coverage of the SSB narrow beam 0 and the SSB narrow beam 1 within the coverage area of the SSB wide beam, and therefore can determine the coverage areas of the SSB narrow beam 0 and the SSB narrow beam 1.

S1504: Obtain a coverage area of at least one of the plurality of beams.

The at least one beam refers to at least one SSB narrow beam, where the target beam is one of the plurality of SSB narrow beams, and a location of the terminal device is within the coverage area of the target beam. A quantity of the at least one beam is less than or equal to a quantity of the plurality of beams.

In this step, that the terminal device obtains the coverage area of at least one of the plurality of beams means that when determining the target beam, the terminal device may obtain, in an iterative manner, a coverage area of one of the plurality of SSB narrow beams each time, and determine whether a location of the terminal device is within the coverage area of the SSB narrow beam. When the terminal device determines that its location is within the coverage area of the SSB narrow beam, the terminal device stops detection. When the detection is stopped, the terminal device may have determined the target beam after iterating through all the SSB narrow beams in the plurality of SSB narrow beams, or may have determined the target beam after detecting only some of the SSB narrow beams. Therefore, the terminal device obtains the coverage area of at least one of the plurality of beams.

S1505: Determine the target beam from the at least one beam based on the location of the terminal device and the coverage of the at least one beam.

The at least one beam refers to at least one SSB narrow beam. With reference to the description in S1504, when the terminal device determines that its location is within the coverage of an SSB narrow beam, the terminal device determines this SSB narrow beam as the target beam.

For example, the plurality of SSB narrow beams corresponding to one SSB wide beam include an SSB narrow beam 0, an SSB narrow beam 1, and an SSB narrow beam 2. When determining the target beam, the terminal device first obtains the coverage of the SSB narrow beam 0. When the terminal device determines that its location is within the coverage of the SSB narrow beam 0, the terminal device does not obtain the coverage of the SSB narrow beam 1 or the coverage of the SSB narrow beam 2, and determines the SSB narrow beam 0 as the target beam. In this case, the quantity of the at least one beam is less than the quantity of the plurality of beams, which helps simplify an execution step of the terminal device.

For another example, the multiple SSB narrow beams corresponding to an SSB wide beam include an SSB narrow beam 0, an SSB narrow beam 1, and an SSB narrow beam 2. When determining the target beam, the terminal device first obtains coverage information of the SSB narrow beam 0. When the terminal device determines that its location is not within the coverage area of the SSB narrow beam 0, the terminal device continues to obtain coverage information of the SSB narrow beam 1. When the terminal device determines that its location is not within the coverage area of the SSB narrow beam 1, the terminal device continues to obtain coverage information of the SSB narrow beam 2. When the terminal device determines that its location is within the coverage area of the SSB narrow beam 2, the terminal device determines the SSB narrow beam 2 as the target beam. In this case, the quantity of the at least one beam is equal to the quantity of the plurality of beams.

S1506: The terminal device sends a random access preamble to the network device, where the random access preamble is located on an RO corresponding to the target beam. Correspondingly, the network device receives the random access preamble. Alternatively, the terminal device sends the random access preamble to the network device on an RO corresponding to the target beam.

For the description of S1506, refer to the foregoing description of S1003. Details are not described herein again.

In this embodiment of this application, after receiving the configuration information indicating that the SSB wide beam corresponds to the plurality of SSB narrow beams, the terminal device receives the first information and the beam pattern information. The terminal device may determine, based on the first information and the beam pattern information, a coverage area of each SSB narrow beam in the plurality of SSB narrow beams. Then, the terminal device may determine a target beam based on a location of the terminal device, where the location of the terminal device is within the coverage area of the target beam. Then, the terminal device may select to send a random access preamble on an RO corresponding to the target beam, thereby reducing a probability of collision when a random access preamble is sent in a random access process, and improving an access capacity.

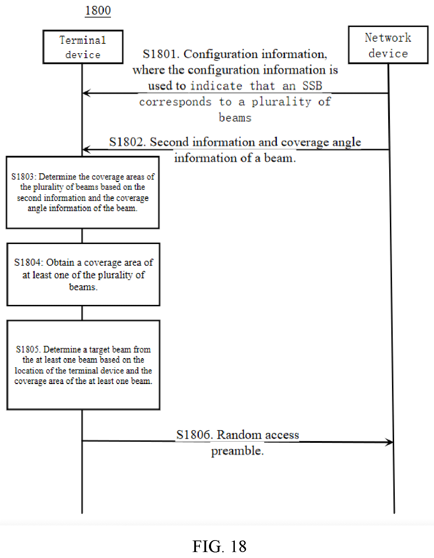

The following describes another implementation process in which a terminal device determines the coverage areas of the plurality of beams and determines a target beam based on the coverage areas of the plurality of beams with reference to FIG. 18.

FIG. 18 is a schematic flowchart of still another random access method 1800 according to an embodiment of this application. A plurality of beams in the method 1800 refer to a plurality of SSB narrow beams corresponding to one SSB wide beam, and one beam refers to at least one SSB narrow beam in the plurality of SSB narrow beams corresponding to one SSB wide beam.

The method 1800 includes S1801 to S1806, and specific steps are as follows:
S1801: A network device sends configuration information to a terminal device, where the configuration information is used to indicate that an SSB corresponds to a plurality of beams, and each beam in the plurality of beams corresponds to one or more ROs. Correspondingly, the terminal device receives the configuration information.

For an introduction to S1801, refer to the foregoing description of S1001. Details are not described herein again.

S1802: The network device sends second information and coverage angle information of a beam to the terminal device. Correspondingly, the terminal device receives the second information and the coverage angle information of the beam.

Among them, the second information is used to indicate the location of the network device, and the beam coverage angle information is used to indicate the coverage angle of each of the plurality of beams.

Optionally, the network device is a satellite base station, the second information is ephemeris information of the satellite base station, and the ephemeris information may indicate the location of the satellite base station.

Taking an example where the coverage angle of an SSB narrow beam is 16 degrees and the indication precision is 0.1 degrees, the network device needs 16 bits to indicate the coverage angle of the SSB narrow beam, where 8 bits represent the positive number range and 8 bits represent the negative number range. On this basis, if the bit overhead is to be reduced, one could consider halving the indication precision, in which case the network device would need 14 bits to indicate the coverage angle of the SSB narrow beam.

In this step, the information about the coverage angle of the beam being used to indicate the coverage angle of each of the plurality of beams includes the following two cases: directly indicating the coverage angle of each of the plurality of beams; or, indicating the coverage angles of some of the plurality of beams, where the coverage angles of the other beams in the plurality of beams can be deduced based on the coverage angles of these some beams. This is an indirect way in which the information about the coverage angle of the beams is used to indicate the coverage angle of each of the plurality of beams.

For a manner in which the coverage angle information of the beam indirectly indicates the coverage angle of each of the plurality of beams, for example, the SSB wide beam 0 corresponds to the SSB narrow beam 0 and the SSB narrow beam 1. The network device includes, in the coverage angle information of the beam, that the coverage angle of the SSB narrow beam 0 is α, and the coverage angle information of the beam further includes a difference β between the coverage angle of the SSB narrow beam 1 and the coverage angle of the SSB narrow beam 0. In this way, the terminal device may determine the coverage angle of the SSB narrow beam 1 based on α and β, thereby reducing signaling overheads.

In another possible implementation, the coverage angle information of the beam may include a coverage angle of the SSB wide beam and a difference between the coverage angle of the SSB wide beam and a coverage angle of each of the plurality of SSB narrow beams corresponding to the SSB wide beam. In this way, the coverage angle of each of the plurality of SSB narrow beams may also be indirectly indicated, thereby reducing signaling overheads.

In another possible implementation, the coverage angle information of the beam may include a coverage angle of the SSB wide beam and an angle design rule of a plurality of SSB narrow beams corresponding to the SSB wide beam. For example, the angle design rule is to equally divide the coverage angle of the SSB wide beam. In this way, the coverage angle of each SSB narrow beam in the plurality of SSB narrow beams can also be indirectly indicated, thereby helping reduce signaling overheads.

S1803: The terminal device determines coverage areas of the plurality of beams based on the second information and the coverage angle information of the beam.

With reference to the foregoing description of S1802, after knowing the location of the network device and the coverage angle of each beam in the plurality of beams, the terminal device may determine the coverage area of each beam in the plurality of beams. The coverage angle of the beam is an angle between a line connecting the network device to a center point of the coverage area and a line connecting the network device to an edge of the coverage area.

S1804: Obtain a coverage area of at least one beam in the plurality of beams.

For an introduction to S1804, refer to the foregoing description of S1504, and details are not described herein again.

S1805: Determine the target beam from the at least one beam based on the location of the terminal device and the coverage of the at least one beam.

For an introduction to S1805, refer to the foregoing description of S1505, and details are not described herein again.

S1806: The terminal device sends a random access preamble to the network device, where the random access preamble is located on an RO corresponding to the target beam. Correspondingly, the network device receives the random access preamble. Alternatively, the terminal device sends the random access preamble to the network device on the RO corresponding to the target beam.

For an introduction to S1806, refer to the foregoing description of S1003, and details are not described herein again.

In this embodiment of this application, after receiving the configuration information indicating that the SSB wide beam corresponds to a plurality of SSB narrow beams, the terminal device receives the second information and the coverage angle information of the beam. The terminal device may determine, based on the second information and the coverage angle information of the beam, a coverage area of each of the plurality of SSB narrow beams. Then, the terminal device may determine a target beam based on a location of the terminal device, where the location of the terminal device is within the coverage area of the target beam. Then, the terminal device may select to send a random access preamble on an RO corresponding to the target beam, thereby reducing a probability of collision of sending a random access preamble in a random access process and improving an access capacity.

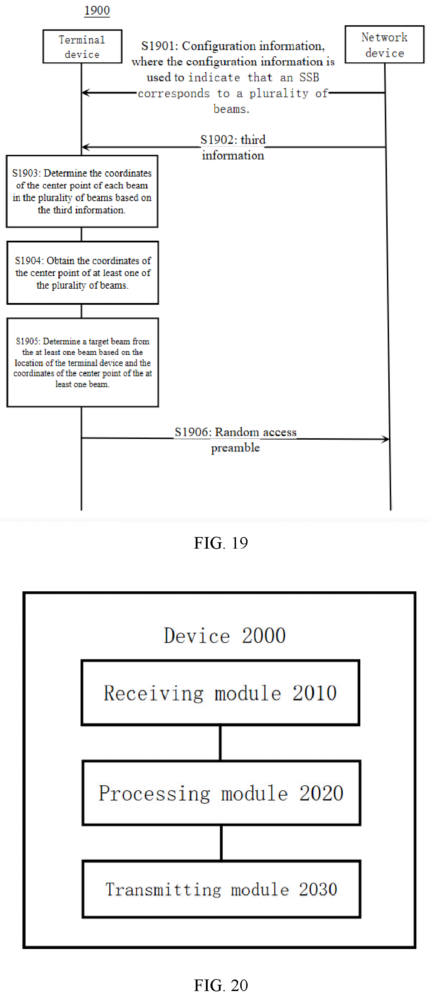

The following further describes an implementation process in which another terminal device determines the coverage areas of the plurality of beams and determines a target beam based on the coverage areas of the plurality of beams with reference to FIG. 19.

FIG. 19 is a schematic flowchart of still another random access method 1900 according to an embodiment of this application. The plurality of beams in the method 1900 refer to a plurality of SSB narrow beams corresponding to one SSB wide beam, and the at least one beam refers to at least one SSB narrow beam in the plurality of SSB narrow beams corresponding to one SSB wide beam.

Method 1900 includes S1901 to S1906, and specific steps are as follows:
S1901: A network device sends configuration information to a terminal device, where the configuration information is used to indicate that an SSB corresponds to a plurality of beams, and each beam in the plurality of beams corresponds to one or more ROs. Correspondingly, the terminal device receives the configuration information.

For an introduction to S1901, refer to the foregoing description of S1001. Details are not described herein again.

S1902: The network device sends third information to the terminal device. Correspondingly, the terminal device receives the third information.

The third information is used to indicate a coordinate of a center point of each beam in the plurality of beams, or is used to indicate a distance between a reference point and each beam in the plurality of beams and a coverage angle of each beam in the plurality of beams.

Optionally, the reference point may be a satellite foot point, or may be a point on another ground of the network device.

In this step, the third information is used to indicate the coordinates of the center point of each of the plurality of beams in the following two cases: directly indicating the coordinates of the center point of each of the plurality of beams; or, indicating the coordinates of the center point of some beams in the plurality of beams, where the coordinates of the center point of the other beams in the plurality of beams may be deduced based on the coordinates of the center point of the some beams. This is a manner in which the third information indirectly indicates the coordinates of the center point of each of the plurality of beams.

S1903: The terminal device determines the coordinates of the center point of each of the plurality of beams based on the third information.

When the third information is used to indicate the distance between the reference point and each of the plurality of beams and the coverage angle of each of the plurality of beams, the terminal device determines the coordinates of the center point of each of the plurality of beams based on the coordinates of the reference point, the distance between the reference point and each of the plurality of beams, and the coverage angle of each of the plurality of beams, where the coordinates of the center point of each of the plurality of beams are centered on the coordinates of the reference point.

For example, if the maximum distance is 128 kilometers and the distance indication precision is 1 kilometer, the network device needs to indicate the distance using 8 bits (bits); if the angle indication is 360 degrees and the angle indication precision is 0.5 degrees, the network device needs to indicate the angle using 10 bits. In this way, the terminal device needs a total of 18 bits to indicate the distance and the angle. If the bit overhead needs to be reduced, the indication angle precision can be reduced. For example, if the indication angle precision is reduced by one half, the network device needs to indicate the angle using 9 bits, and thus the terminal device needs a total of 17 bits to indicate the distance and the angle.

S1904: Obtain the coordinates of the center point of at least one of the plurality of beams.

The description of S1903 is similar to the description of S1504 above. After the terminal device determines the coordinates of the center point of each beam in the plurality of beams, the terminal device obtains the coordinates of the center point of one beam from the plurality of beams in an iterative manner each time, and calculates whether the distance between the terminal device and the beam meets a preset condition. If the condition is met, the terminal device stops detection. When stopping detection, the terminal device may have obtained the coordinates of the center point of all beams in the plurality of beams before determining the target beam, or may have obtained the coordinates of the center point of only some beams in the plurality of beams before determining the target beam. Therefore, the terminal device obtains the coordinates of the center point of at least one beam in the plurality of beams.

S1905: Determine a target beam from the at least one beam based on the location of the terminal device and the coordinates of the center point of the at least one beam.

Optionally, S1905 specifically includes: determining, based on the location of the terminal device and the coordinates of the center point of the at least one beam, a distance between the terminal device and each beam in the at least one beam; and determining a beam in the at least one beam whose distance from the terminal device meets a preset condition as the target beam.

With reference to the description of S1904, the terminal device obtains the coordinates of the center point of one beam from the plurality of beams each time in an iterative manner, and calculates, based on the coordinates of the center point of the beam, a distance between the beam and the terminal device. If the distance between the terminal device and the beam meets a preset condition, the terminal device determines the beam as the target beam. The preset condition may be less than or equal to a preset threshold, that is, the distance between the terminal device and the beam is less than or equal to the preset threshold. Alternatively, the preset condition may be a shortest distance, that is, the distance between the terminal device and the beam is the shortest.

It should be understood that there may be more than one beam among the plurality of beams whose distance from the terminal device is less than or equal to the preset threshold, and the terminal device determines the first beam whose distance from the terminal device is less than or equal to the preset threshold as the target beam.

It should be understood that when the preset condition is the shortest distance, the terminal device needs to obtain coordinates of all center points of the plurality of beams, so that the terminal device can determine the beam that has the shortest distance from the terminal device.

S1906: The terminal device sends a random access preamble to the network device, where the random access preamble is located on an RO corresponding to the target beam. Correspondingly, the network device receives the random access preamble. In other words, the terminal device sends the random access preamble to the network device on the RO corresponding to the target beam.

For an introduction to S1906, refer to the foregoing description of S1003. Details are not described herein again.

In this embodiment of this application, after receiving the configuration information indicating that the SSB wide beam corresponds to the plurality of SSB narrow beams, the terminal device receives the third information. The terminal device may determine, based on the third information, a coverage area of each of the plurality of SSB narrow beams. Then, the terminal device may determine a target beam based on a location of the terminal device, where the location of the terminal device is within the coverage area of the target beam. Then, the terminal device may send a random access preamble on an RO corresponding to the target beam, thereby reducing a probability of a collision when a random access preamble is sent in a random access process, and improving an access capacity.

It should be noted that embodiments obtained by combining the foregoing implementation with the steps described above also fall within the protection scope of this application.

It should be understood that sequence numbers of the foregoing processes do not mean execution sequences. The execution sequences of the processes should be determined according to functions and internal logic of the processes, and should not constitute any limitation on the implementation processes of embodiments of this application.

The foregoing describes in detail the random access method according to the embodiments of this application with reference to FIG. 10 to FIG. 19. The following will describe in detail a communications apparatus according to the embodiments of this application with reference to FIG. 20 to FIG. 22.

FIG. 20 is a schematic block diagram of a communications apparatus 2000 according to an embodiment of this application. The apparatus 2000 includes a receiving module 2010, a processing module 2020, and a sending module 2030.

The receiving module 2010 is configured to receive configuration information from a network device, where the configuration information is used to indicate that an SSB corresponds to a plurality of beams, and each of the plurality of beams corresponds to one or more ROs; the processing module 2020 is configured to determine a target beam from the plurality of beams; and the sending module 2030 is configured to send a random access preamble to the network device on an RO corresponding to the target beam.

Optionally, the processing module 2020 is configured to: obtain a coverage area of at least one of the plurality of beams; and determine a target beam from the at least one beam based on a location of the terminal device and the coverage area of the at least one beam.

Optionally, the receiving module 2010 is configured to: receive first information and beam pattern information from a network device, where the first information is used to indicate a coverage area of the network device, and the beam pattern information is used to indicate distribution of at least one SSB in the coverage area of the network device, a plurality of beams corresponding to each of the at least one SSB, and distribution of the plurality of beams in a coverage area of a corresponding SSB. The processing module 2020 is configured to: determine a coverage area of the at least one SSB based on the distribution of the at least one SSB in the coverage area of the network device; and determine a coverage area of the plurality of beams based on the distribution of the plurality of beams in the coverage area of the corresponding SSB.

Optionally, the receiving module 2010 is configured to receive second information and coverage angle information of a beam, where the second information is used to indicate a location of the network device, and the coverage angle information of the beam is used to indicate a coverage angle of each of the plurality of beams. The processing module 2020 is configured to determine coverage areas of the plurality of beams based on the location of the network device and the coverage angle information of the beam.

Optionally, the processing module 2020 is configured to: obtain coordinates of a center point of at least one of the plurality of beams; determine, based on the location of the terminal device and the coordinates of the center point of the at least one beam, a distance between the terminal device and each of the at least one beam; and determine, as a target beam, a beam in the at least one beam whose distance from the terminal device meets a preset condition.

Optionally, the preset condition includes: being less than or equal to a preset threshold; or being a shortest distance.

Optionally, the receiving module 2010 is configured to receive third information from the network device, where the third information is used to indicate a center point coordinate of each of the plurality of beams, or is used to indicate a distance between a reference point and each of the plurality of beams and a coverage angle of each of the plurality of beams. The processing module 2020 is configured to determine the center point coordinate of each of the plurality of beams based on the third information.

In an optional example, a person skilled in the art may understand that the apparatus 2000 may be specifically the terminal device in the foregoing embodiment, or the functions of the terminal device in the foregoing embodiment may be integrated into the apparatus 2000. The foregoing functions may be implemented by hardware, or may be implemented by hardware executing corresponding software. The hardware or software includes one or more modules corresponding to the foregoing functions. For example, the receiving module 2010 may be a communications interface, for example, a transceiver interface. The apparatus 2000 may be configured to perform each procedure and/or step corresponding to the terminal device in the foregoing method embodiments.

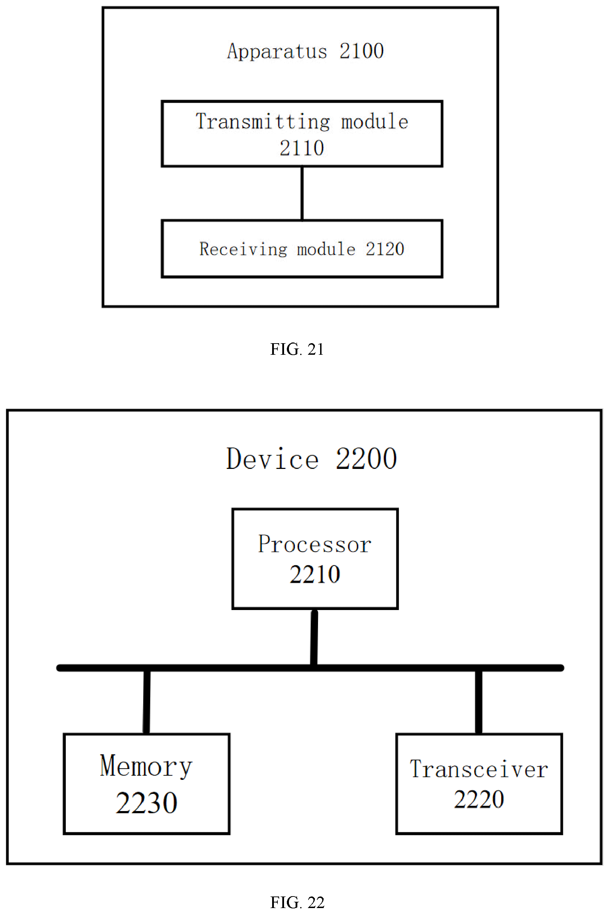

FIG. 21 is a schematic block diagram of another communications apparatus 2100 according to an embodiment of this application. The apparatus 2100 includes a sending module 2110 and a receiving module 2120.

Wherein, the sending module 2110 is configured to send configuration information to a terminal device, where the configuration information is used to indicate that an SSB corresponds to a plurality of beams, and each beam in the plurality of beams corresponds to one or more ROs; and the receiving module 2120 is configured to receive a random access preamble from the terminal device, where the random access preamble is located on an RO corresponding to a target beam in the plurality of beams.

Optionally, the sending module 2110 is configured to send first information and beam pattern information to the terminal device, where the first information is used to indicate a coverage area of the network device, and the beam pattern information is used to indicate distribution of at least one SSB in the coverage area of the network device, a plurality of beams corresponding to each of the at least one SSB, and distribution of the plurality of beams in a coverage area of the corresponding SSB.

Optionally, the sending module 2110 is configured to send second information and coverage angle information of a beam to the terminal device, where the second information is used to indicate a location of the network device, and the coverage angle information of the beam is used to indicate a coverage angle of each of the plurality of beams.

Optionally, the sending module 2110 is configured to send third information to the terminal device, where the third information is used to indicate coordinates of a center point of each of the plurality of beams; or is used to indicate a distance between a reference point and each of the plurality of beams and a coverage angle of each of the plurality of beams.

In an optional example, a person skilled in the art may understand that the apparatus 2100 may be specifically the network device in the foregoing embodiments, or functions of the network device in the foregoing embodiments may be integrated into the apparatus 2100. The foregoing functions may be implemented by hardware, or may be implemented by hardware executing corresponding software. The hardware or software includes one or more modules corresponding to the foregoing functions. For example, the sending module 2110 may be a communications interface, for example, a transceiver interface. The apparatus 2100 may be configured to perform each procedure and/or step corresponding to the network device in the foregoing method embodiments.

It should be understood that the apparatus 2000 and the apparatus 2100 herein are embodied in a form of a functional module. The term "module" herein may refer to an application-specific integrated circuit (application-specific integrated circuit, ASIC), an electronic circuit, a processor (for example, a shared processor, a dedicated processor, or a group of processors) configured to execute one or more software or firmware programs and a memory, a merged logic circuit, and/or another suitable component that supports the described functions.

In embodiments of this application, the apparatus 2000 and the apparatus 2100 may also be chips or chip systems, for example, a system on chip (system on chip, SoC). Correspondingly, the transceiver module may be a transceiver circuit of the chip. This is not limited herein.

FIG. 22 is a schematic block diagram of still another communications apparatus 2200 according to an embodiment of this application. The apparatus 2200 includes a processor 2210, a transceiver 2220, and a memory 2230. The processor 2210, the transceiver 2220, and the memory 2230 communicate with each other through an internal connection path. The memory 2230 is configured to store an instruction, and the processor 2210 is configured to execute the instruction stored in the memory 2230, to control the transceiver 2220 to send a signal and/or receive a signal.

It should be understood that the apparatus 2200 may be specifically the terminal device or the network device in the foregoing embodiments, or functions of the terminal device or the network device in the foregoing embodiments may be integrated into the apparatus 2200. The apparatus 2200 may be configured to perform the steps and/or procedures corresponding to the terminal device or the network device in the foregoing method embodiments. Optionally, the memory 2230 may include a read-only memory and a random access memory, and provide an instruction and data for the processor. A part of the memory may further include a non-volatile random access memory. For example, the memory may further store information about an information type. The processor 2210 may be configured to execute the instruction stored in the memory, and when the processor executes the instruction, the processor 2210 may perform the steps and/or procedures corresponding to the terminal device or the network device in the foregoing method embodiments.

It should be understood that, in the embodiments of this application, the processor may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

In an implementation process, the steps of the foregoing methods may be implemented by an integrated logic circuit in hardware in the processor or by instructions in a form of software. The steps of the methods disclosed in embodiments of this application may be directly implemented by hardware of a processor, or may be implemented by a combination of hardware in the processor and software modules. The software module may be located in a mature storage medium in the art, such as a random access memory, a flash memory, a read-only memory, a programmable read-only memory, an electrically erasable programmable memory, a register, or the like. The storage medium is located in the memory, and the processor executes the instructions in the memory, and completes the steps of the foregoing methods in combination with hardware of the processor. To avoid repetition, details are not described herein again.

A person of ordinary skill in the art may be aware that, in combination with the examples described in embodiments disclosed in this specification, modules and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described systems, apparatuses, and modules, refer to a corresponding process in the foregoing method embodiments, and details are not described herein again.

In the embodiments provided in this application, it should be understood that the disclosed systems, apparatuses, and methods may be implemented in other ways. For example, the foregoing apparatus embodiments are merely examples. For example, the division into the modules is merely logical function division, and there may be another division manner during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules; that is, they may be located in one place, or may be distributed over multiple network modules. Some or all of the modules may be selected according to actual needs to achieve the objectives of the solutions in this embodiment.

In addition, functional modules in embodiments of this application may be integrated into one processing module, each of the modules may exist physically, or two or more modules may be integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or a part of the steps of the methods described in embodiments of this application. The storage medium mentioned above includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined according to the protection scope of the claims.

## Claims

1. A random access method, applied to a terminal device or a chip in a terminal device, wherein the method comprises:
receiving configuration information from a network device, wherein the configuration information is used to indicate that a synchronization signal block SSB corresponds to a plurality of beams, and each of the plurality of beams corresponds to one or more random access occasions RO;
determining a target beam from the plurality of beams;
Sending, by the resource region corresponding to the target beam, a random access preamble to the network device.

2. The method according to claim 1, wherein the determining a target beam from the plurality of beams comprises:
obtaining a coverage area of at least one beam in the plurality of beams;
determining the target beam from the at least one beam based on the location of the terminal device and the coverage area of the at least one beam.

3. The method according to claim 2, wherein before the obtaining a coverage area of at least one beam in the plurality of beams, the method further comprises:
receiving first information and beam pattern information from the network device, wherein the first information is used to indicate a coverage area of the network device, the beam pattern information is used to indicate distribution of at least one SSB in the coverage area of the network device, a plurality of beams corresponding to each of the at least one SSB, and distribution of the plurality of beams in a coverage area of the corresponding SSB;
determining a coverage area of the at least one SSB based on the distribution of the at least one SSB in the coverage area of the network device;
determining a coverage area of the plurality of beams based on the distribution of the plurality of beams in the coverage area of the corresponding SSB.

4. The method according to claim 2, wherein before the obtaining the coverage area of at least one beam of the plurality of beams, the method further comprises:
receiving second information and coverage angle information of a beam, wherein the second information is used to indicate a location of the network device, and the coverage angle information of the beam is used to indicate a coverage angle of each of the plurality of beams;
determining coverage areas of the plurality of beams based on the location of the network device and the coverage angle information of the beam.

5. The method according to claim 2, wherein the obtaining coverage areas of at least one beam of the plurality of beams comprises:
obtaining coordinates of a center point of at least one beam of the plurality of beams;
the determining the target beam from the at least one beam based on the location of the terminal device and the coverage area of the at least one beam comprises:
determining, based on the location of the terminal device and the coordinates of the center point of the at least one beam, a distance between the terminal device and each beam of the at least one beam;
determining the beam whose distance from the terminal device meets a preset condition in the at least one beam as the target beam.

6. The method according to claim 5, wherein the preset condition comprises:
is less than or equal to a preset threshold; or,
is the shortest distance.

7. The method according to claim 5 or 6, wherein before the obtaining coordinates of a center point of at least one beam in the plurality of beams, the method further comprises:
receiving third information from the network device, wherein the third information is used to indicate a coordinate of a center point of each of the plurality of beams, or is used to indicate a distance between a reference point and each of the plurality of beams and a coverage angle of each of the plurality of beams;
determining a coordinate of a center point of each of the plurality of beams based on the third information.

8. A random access method, applied to a network device, wherein the method comprises:
sending configuration information to a terminal device, wherein the configuration information is used to indicate that a synchronization signal block SSB corresponds to a plurality of beams, and each of the plurality of beams corresponds to one or more random access occasions ROs;
receiving a random access preamble from the terminal device, wherein the random access preamble is located on an RO corresponding to a target beam of the plurality of beams.

9. The method according to claim 8, wherein the method further comprises:
sending first information and beam pattern information to the terminal device, wherein the first information is used to indicate a coverage area of the network device, the beam pattern information is used to indicate a distribution of at least one SSB in the coverage area of the network device, a plurality of beams corresponding to each of the at least one SSB, and a distribution of the plurality of beams in a coverage area of the corresponding SSB.

10. The method according to claim 8, wherein the method further comprises:
sending second information and coverage angle information of a beam to the terminal device, wherein the second information is used to indicate a location of the network device, and the coverage angle information of the beam is used to indicate a coverage angle of each of the plurality of beams.

11. The method according to claim 8, wherein the method further comprises:
sending third information to the terminal device, wherein the third information is used to indicate a coordinate of a center point of each of the plurality of beams; or is used to indicate a distance between a reference point and each of the plurality of beams and a coverage angle of each of the plurality of beams.

12. A communication apparatus, comprising a module configured to implement the method according to any one of claims 1 to 7, or a module configured to implement the method according to any one of claims 8 to 11.

13. A communication apparatus, comprising a processor, wherein the processor is coupled to a memory, the memory is configured to store a program or instructions, and when the program or the instructions is/are executed by the processor, the method according to any one of claims 1 to 7 is performed, or the method according to any one of claims 8 to 11 is performed.

14. A computer-readable storage medium, configured to store a computer program, wherein when the computer program is run on a computer, the method according to any one of claims 1 to 7 is performed, or the method according to any one of claims 8 to 11 is performed.
